# EUROPEAN PATENT APPLICATION

(11) **EP 2 679 802 A2**
(43) Date of publication of application: **01.01.2014**
(21) Application number: 12750214.4
(22) Date of filing: 23.02.2012
(51) Int. Cl.: F03B 13/18, F03B 17/02, F16D 41/069

(54) **WAVE POWER GENERATING APPARATUS**

(30) Priority: 23.02.2011 KR 20110015944; 22.03.2011 KR 20110025432; 08.12.2011 KR 20110131019
(71) Applicant: Lee, Dong In, Paju-si, Gyeonggi-do 413-841 (KR)
(72) Inventor: Lee, Dong In, Paju-si, Gyeonggi-do 413-841 (KR)
(74) Representative: Cabinet Plasseraud
(86) International application number: PCT/KR2012/001376
(87) International publication number: WO 2012/115456

(57) **Abstract**

This disclosure relates to a wave power generating apparatus capable of operating a generator with a tidal motion and wave energy of the tide to be converted into electric energy, and more particularly, to a wave power generating apparatus capable of generating power by transmitting a rotating force to a power transmission shaft by means of a tidal motion of the tide when a float moves upwards and simultaneously capable of generating power by transmitting kinetic energy of the float obtained by lateral force of the tide to the power transmission shaft.

## Description

### [Technical Field]

This disclosure relates to a wave power generating apparatus capable of operating a generator with a tidal motion and wave energy of the tide to be converted into electric energy, and more particularly, to a wave power generating apparatus capable of generating power by transmitting a rotating force to a power transmission shaft by means of a tidal motion of the tide when a float moves upwards and simultaneously capable of generating power by transmitting kinetic energy of the float obtained by lateral force of the tide to the power transmission shaft.

### [Background Art]

Generally, a wave power generating apparatus generates power by using tidal motion energy of the tide and may be generally classified into a movable body type, an oscillating water column type and a water overtopping type.

First, the movable body type wave power generation uses a mechanism designed to sensitively respond to the movement of the water surface so that wave energy is directly transmitted to the mechanism to convert the motion of the mechanism into electric energy. For example, a float including a pendulum is put on the water to fluctuate according to the tide so that the movement of the pendulum included in the float may be changed into a rotating movement, thereby rotating a generator by means of a gear. In this technique, power of about 10 W is obtained with a tide height of 40 cm, which may be used as a sign for a seaway or a guide of a safe seaway by turning on a light or generating a sound. Since wave energy is directly applied to the mechanism, the mechanism should endure an external force caused by the tide, which results in weak structural safety. However, since the wave energy is directly absorbed, the energy conversion efficiency is relatively advantageous.

In addition, in the oscillating water column wave power generation, the change of a space created by the tide introduced into a water column is converted into a variation of the inner air, which is applied to a guide duct to generate an air flow, thereby rotating a turbine installed in the guide duct and obtaining electricity. If an incident tide is reflected on the front side of the device, a standing tide is formed, and at this time an air flow is generated at an upper nozzle.

Moreover, in the water overtopping wave power generation, a slope is provided at the front side of an advancing tide, and then if the tide passes over the slope by means of kinetic energy, this is converted into potential energy and the water is stored. After that, if the stored seawater flows to the lower portion of the reservoir by means of a formed differential head, a turbine runner installed at the lower portion of the seawater passage is rotated to generate power.

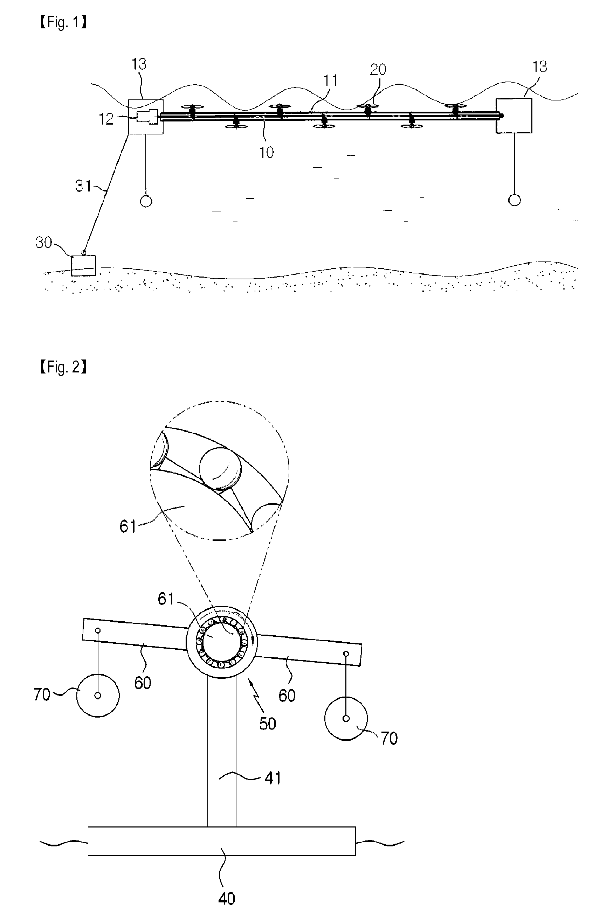

Fig. 1 is a schematic diagram showing a general wave power generating apparatus.

As an example of the wave power generating apparatus, a wave power generating apparatus, in which a plurality of rotating blades rotating according to a tidal movement of the tide are installed at regular intervals to a main body floating on the sea surface, includes: a main body 11 installed in a power generation shaft 10 and elongating in the horizontal direction; floatation tanks 13 respectively connected and fixed to both end portions of the main body 11 to float by buoyancy so that any one of them has a generator 12 connected to the power generation shaft 10; and a plurality of rotating blades 20 rotating only in one direction by a tidal motion of the tide and installed at upper and lower portions of the main body 11 in turns at regular intervals. The floatation tank 13 or the main body 11 is connected to a fixed body 30 installed at the seabed by a fixing rope 31, so that the main body 11 is not lost by tides. However, there is a limit in continuously generating power at the installation spot.

In addition, the rotating blade 20 is installed at one end portion of a rotary shaft, the rotary shaft is supported to the main body 11 by means of a bearing, a bevel gear is installed at the other end portion of the rotary shaft by means of a one-directional bearing, and the bevel gear is engaged with a bevel gear of the power generation shaft 10. Therefore, if the rotating blade 20 rotates, the rotating force is transmitted to the rotary shaft, the power generation shaft 10 is rotated by means of the engagement of the bevel gear, and therefore the generator 12 connected to one end of the power generation shaft 10 generates power. However, in the wave power generating apparatus described above, the power generation shaft and the main body are formed long for continuous power generation and installed at the sea surface. Therefore, tides are directly applied to the apparatus and should be endured. For this reason, the above apparatus has weak structural safety.

Referring to Fig. 2 showing another example of the wave power generating apparatus, this apparatus includes: a float 40 contacting the sea surface to receive wave energy; a central shaft 41 extending upwards from the float 40; pendulum supports 60 extending at both right and left sides of the central shaft 41; pendulums 70 coupled at both right and left sides of the pendulum support 60 to be capable of fluctuating; a rotating body 61 rotating with a power received from the pendulum support 60; and a generator for generating power with the rotating force of the rotating body 61. The pendulum support 60 and the rotating body 61 are coupled by a power transmission unit 50 so that the rotating body 61 rotates with the power of the pendulum support 60 only in one direction.

However, in case of a strong tide such as a seismic sea tide, the wave power generating apparatus should endure an external force by the tide since the tide is directly applied to the central shaft 41, the pendulum support 60 or the like. Therefore, similar to the former example, the apparatus has weak structural safety, is not available if a tide is great and is not efficient since the apparatus utilizes a free-fall load of the pendulum which cannot use an acceleration of tide.

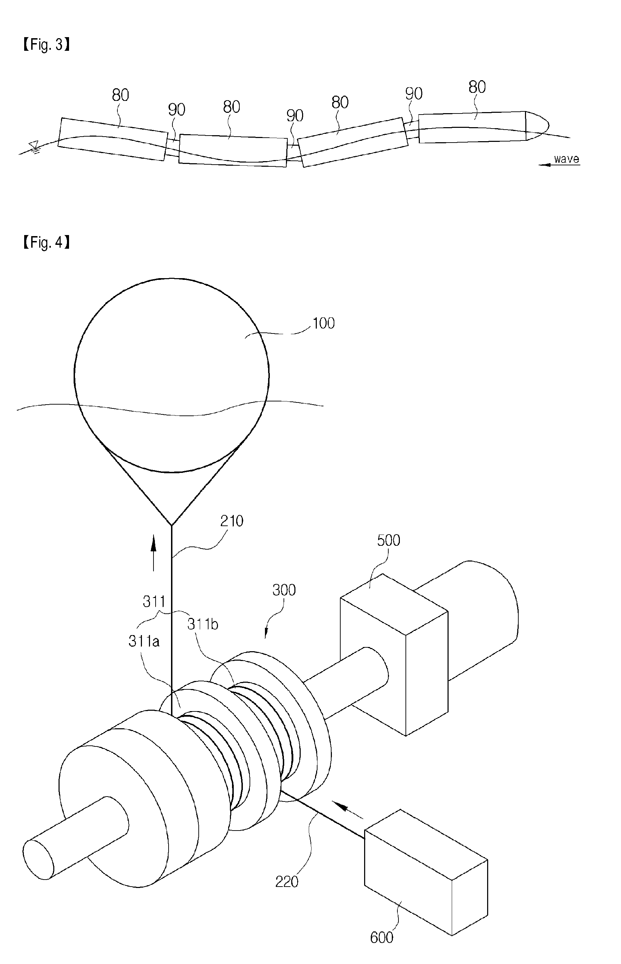

In addition, as the movable body wave power generating apparatus, a movable body wave power generating apparatus produced by Pelamis is presently commercialized. Here, as shown in Fig. 3, several cylindrical floats 80 are connected by a joint 90 to float on the sea surface, and then whenever the sea surface waves, the connection portions are folded and unfolded, which is used to operate hydraulic cylinders and hydraulic pumps provided in the cylindrical floats 80, thereby operating a generator to generate power.

However, in case of a big tide, the wave power generating apparatus may also be broken due to a great moment. In addition, even though a tide is moderate, if the moving direction of the tide is perpendicular to the wind direction due to a gust, the structure may be seriously broken, as known in the art. Moreover, since the force is indirectly transmitted to the generator via hydraulic cylinders and hydraulic pumps, the efficiency is inferior to the direct power generation method. Further, since all components for power generation as described above are included in the float, the float has deteriorated efficiency.

In addition, the wave power generating apparatuses described above are not able to use wave energy of a surging tide even though they may generate power with a tidal motion of the tide.

### [Disclosure]

### [Technical Problem]

This disclosure is directed to providing a wave power generating apparatus, which includes: a float floating on a sea surface by buoyancy; a power transmission rope having one end coupled to the float; a power transmission unit spaced apart from a lower side of the float and configured so that the power transmission rope is wound therearound to transmit a rotating force only in one direction; a power transmission shaft rotating with power transmitted from the power transmission unit; a generator connected to one side of the power transmission shaft; a return rope having one end wound around the power transmission unit; and a return mechanism to which the other end of the return rope is coupled, wherein the power transmission rope, the return rope and the power transmission shaft are coupled by the power transmission unit, so that the power transmission shaft rotates only when the power transmission rope is pulled to one side. When the float moves upwards, a rotating force is transmitted to the power transmission shaft to generate power, and when the float moves downward, the power transmission rope is restored while being wound by the return mechanism. Therefore, the present disclosure provides a wave power generating apparatus with an improved structural stability regardless of an external force by a tide, while ensuring continuous power generation.

In addition, the present disclosure is directed to providing a wave power generating apparatus, wherein a plurality of wave power generating apparatuses are connected in parallel, wherein the power transmission unit, the power transmission shaft, the generator and the return mechanism are accommodated in a main body of each wave power generating apparatus so that the plurality of main bodies are connected to each other, wherein the floats are connected to each other by a float support rope, wherein a plurality of inclined power transmission ropes are coupled with a slope so that one end thereof is wound around the power transmission unit of the main body and the other end thereof is coupled to an adjacent float, wherein a main support rope is horizontally disposed to be spaced apart from a lower side of the float by a predetermined distance so that one end or both ends thereof are fixed to the seabed, and wherein a branched support rope of which both ends are coupled to the float and the main support rope is connected with a slope. Therefore, the present disclosure provides a wave power generating apparatus, which may generate power when the float moves upwards since a rotating force is transmitted to the power transmission shaft by using a tidal motion of the tide to generate power, and may also generate power by transmitting kinetic energy of the float caused by a lateral force of a tide to the power transmission shaft.

### [Technical Solution]

In one general aspect, there is provided a wave power generating apparatus, which includes: a float 100 floating on a sea surface by buoyancy; a power transmission rope 210 having one end coupled to the float 100; a power transmission unit 300 spaced apart from a lower side of the float 100 and configured so that the power transmission rope 210 is wound therearound to transmit a rotating force only in one direction; a power transmission shaft 400 rotating with power transmitted from the power transmission unit 300; a generator 500 connected to one side of the power transmission shaft 400; a return rope 220 having one end wound around the power transmission unit 300; and a return mechanism 600 to which the other end of the return rope 220 is coupled, wherein the power transmission rope 210, the return rope 220 and the power transmission shaft 400 are coupled by the power transmission unit 300, so that the power transmission shaft 400 rotates only when the power transmission rope 210 is pulled to one side.

In addition, a plurality of wave power generating apparatuses 1000 may be connected in parallel; the power transmission unit 300, the power transmission shaft 400, the generator 500 and the return mechanism 600 may be accommodated in a main body 800 of each wave power generating apparatus 1000 so that the plurality of main bodies 800 are connected to each other; the floats 100 may be connected to each other by a float support rope 110; and a plurality of inclined power transmission ropes 210a may be coupled with a slope so that one end thereof is wound around the power transmission unit 300 of the main body 800 and the other end thereof is coupled to an adjacent float 100.

### [Advantageous Effects]

The wave power generating apparatus according to the present disclosure includes: a float floating on a sea surface by buoyancy; a power transmission rope having one end coupled to the float; a power transmission unit spaced apart from a lower side of the float and configured so that the power transmission rope is wound therearound to transmit a rotating force only in one direction; a power transmission shaft rotating with power transmitted from the power transmission unit; a generator connected to one side of the power transmission shaft; a return rope having one end wound around the power transmission unit; and a return mechanism to which the other end of the return rope is coupled, wherein the power transmission rope, the return rope and the power transmission shaft are coupled by the power transmission unit, so that the power transmission shaft rotates only when the power transmission rope is pulled to one side. When the float moves upwards, a rotating force is transmitted to the power transmission shaft to generate power, and when the float moves downward, the power transmission rope is restored while being wound by the return mechanism. Therefore, it is possible to continuously generate power by coupling several power transmission units to the power transmission shaft and connecting several floats by the power transmission rope.

In addition, since the height of the float may be adjusted, power may be efficiently generated even though a tide is great.

Moreover, since wave energy surging by tsunami collides with a plurality of large floats and is converted into kinetic (tide) energy or absorbed, the power of the tsunami may be offset. Further, if this process is performed in the offing spaced apart from the seashore, the apparatus of the present disclosure may also serve as a tsunami shield by reducing the power and speed of tsunami.

In addition, when the float moves upwards, a rotating force is transmitted to the power transmission shaft by using a tidal motion of the tide to generate power, and kinetic energy of the float caused by a lateral force of a tide may be transmitted to the power transmission shaft to generate power.

Moreover, a lateral force of a tide may be converted into kinetic energy by a collision plate formed at the lower surface of the float and transmitted to the power transmission shaft through an inclined power transmission rope, thereby improving energy production efficiency.

In addition, since the float has a side inclined or rounded or channels are formed at sides and upper and lower surfaces of the float, it is possible to convert a tidal motion of a tide into a vertical movement of the float for generating power, improve stability of the float and reduce erosion of the seashore caused by a tide by weakening the surging tide.

### [Description of Drawings]

Fig. 1 is a schematic diagram showing an example of a general wave power generating apparatus.
Fig. 2 is a schematic diagram showing another example of a general wave power generating apparatus.
Fig. 3 is a schematic diagram showing a still another example of a general wave power generating apparatus.
Figs. 4 and 5 are respectively a perspective view and a front view showing a wave power generating apparatus according to the present disclosure.
Fig. 6 is a schematic side view showing a wave power generating apparatus according to the present disclosure.
Fig. 7 is an exploded perspective view showing a one-directional latchet clutch according to the present disclosure.
Fig. 8 is a front view showing a coupled state of the one-directional latchet clutch according to the present disclosure.
Figs. 9 and 10 are front views along the line A-A' and the line B-B' of Fig. 7.
Fig. 11 is a front sectional view of Fig. 8.
Figs. 12 and 13 are cross-sectional views taken along the line C-C' of Fig. 7.
Figs. 14 to 16 are schematic diagrams showing a rotating roller coupled to a pole according to the present disclosure.
Fig. 17 is a cross-sectional view taken along the line D-D' of Fig. 16.
Fig. 18 is a schematic diagram showing a contact roller unit according to the present disclosure.
Figs. 19 to 24 are schematic diagrams showing a return mechanism according to the present disclosure.
Fig. 25 is a schematic diagram showing an assembled coupled state of the wave power generating apparatus according to the present disclosure.
Fig. 26 is a schematic diagram showing a frame vertical adjustment device according to the present disclosure.
Fig. 27 is a perspective view showing an embodiment of a wave power generating apparatus according to the present disclosure along with a moving wheel.
Fig. 28 is an upper plane view showing a main body and a frame, fixed to the bottom according to the present disclosure.
Fig. 29 is a schematic diagram showing a frame according to the present disclosure.
Figs. 30 to 32 are plane views and a schematic side view in which wave power generating apparatuses according to the present disclosure are connected in series.
Figs. 33 and 34 are schematic diagrams showing that the wave power generating apparatuses according to the present disclosure are connected in series and in parallel.
Figs. 35 to 37 are schematic diagrams for illustrating a fixing method using a frame cell and a penetration rope according to the present disclosure.
Figs. 38 and 39 are perspective views showing an embodiment of the wave power generating apparatus according to the present disclosure.
Fig. 40 is a partially enlarged perspective view of Fig. 39.
Fig. 41 is a schematic diagram in which several wave power generating apparatuses according to the present disclosure are connected.
Figs. 42 to 45 are schematic diagrams showing an embodiment of the wave power generating apparatus according to the present disclosure.
Fig. 46 is a schematic diagram showing an installed state of the wave power generating apparatus according to the present disclosure.
Figs. 47 and 48 are schematic diagrams showing a collision plate of the float according to the present disclosure.
Figs. 49 to 51 are cross-sectional views sowing an embodiment of the float according to the present disclosure.
Figs. 52 and 53 are respectively a perspective view and a cross-sectional view showing a roller and a horn-type guide according to the present disclosure.
Fig. 54 is a schematic diagram showing a float vertical transfer device according to the present disclosure.
Fig. 55 is a schematic diagram showing a frame according to the present disclosure.

**[Detailed Description of Main Elements]**

| | |
|---|---|
| 1000: wave power generating apparatus of the present disclosure | |
| 100: float | |
| 101: inlet hole | 102: outlet hole |
| 103: channel | |
| 110: float support rope | 120: main support rope |
| 130: branched support rope | 140: collision plate |
| 150: hinge | 160: elastic unit |
| 210: power transmission rope | 210a: inclined power transmission rope |
| 220: return rope | |
| 230: second return rope | |
| 300: power transmission unit | |
| 310: one-directional latchet clutch | 311: two-stage pulley |
| 311a: first pulley | 311b: second pulley |
| 320: contact roller unit | 321: roller |
| 322: central shaft | 323: ballast |
| 324: torsion spring | |
| 10: latchet wheel | 11: latchet |
| 12: inner groove | 13: shaft hole |
| 20: pole fixing plate | 21: shaft coupling hole |
| 22: key | 23: key groove |
| 30: pole | 31: hinge |
| 32: mount groove | 33: end portion |
| 34: rotating roller | 40: elastic unit |
| 400: power transmission shaft | 410: universal joint |
| 500: generator | |
| 600: return mechanism | |
| 610: fixed plate | 611: hinge |
| 620: pendulum | 621: roller |
| 622: torsion spring | 623: gear |
| 630: ballast | |
| 640: roller | |
| 641: hollow | 642: shaft |
| 650: clockwork spring | 660: pipe |
| 670: coil spring | 680: sliding block |
| 700: float vertical transfer device | 710: rope fixing shaft |
| 720: moving block | 730: roller |
| 800: main body | 810: moving wheel |
| 811: hollow | 820: balance tank |
| 830: connection plate | 831: roller |
| 840: auxiliary roller | 841: reduction pulley |
| 841a: first pulley | 841b: second pulley |
| 850: horn-type guide | |
| 900: frame | 910: frame cell |
| 910a: rope fixing unit | 911: groove |
| 912: coupling unit | 913: penetration rope |
| 914: fixture | 915: main body frame cell |
| 916: pipe | |
| 920: end plate | 930: fastening unit |
| 931: bolt | 932: nut |
| 940: hinge | 941: connection bracket |
| 942: pin | |
| 950: frame support rope | 960: frame vertical adjustment device |

### [Best Mode]

Hereinafter, the present disclosure will be described in detail with reference to the accompanying drawings.

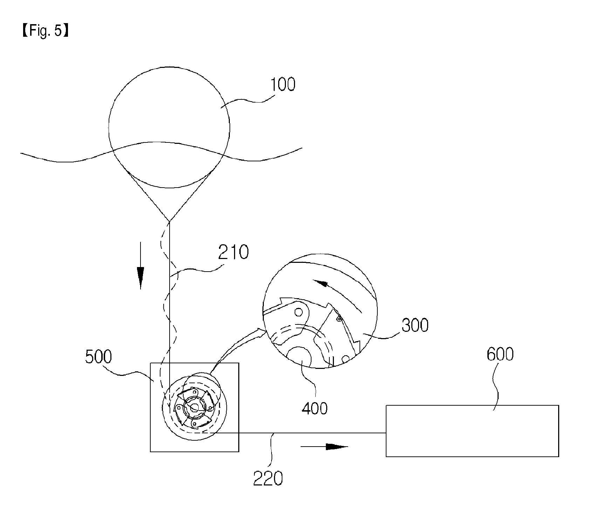

Figs. 4 and 5 are schematic diagrams showing a wave power generating apparatus according to the present disclosure.

As shown in Figs. 4 and 5, the wave power generating apparatus according to the present disclosure includes: a float 100 floating on a sea surface by buoyancy; a power transmission rope 210 having one end coupled to the float 100; a power transmission unit 300 spaced apart from a lower side of the float 100 and configured so that the power transmission rope 210 is wound therearound to transmit a rotating force only in one direction; a power transmission shaft 400 rotating with power transmitted from the power transmission unit 300; a generator 500 connected to one side of the power transmission shaft 400; a return rope 220 having one end wound around the power transmission unit 300; and a return mechanism 600 to which the other end of the return rope 220 is coupled, wherein the power transmission rope 210, the return rope 220 and the power transmission shaft 400 are coupled by the power transmission unit 300, so that the power transmission shaft 400 rotates only when the power transmission rope 210 is pulled to one side.

First, the float 100 may be made of rubber, metal or the like with a hollow structure or made of Styrofoam or expanded plastic resin so as to float on a sea surface by buoyancy.

The power transmission rope 210 has one end fixed to the float 100 and extends downwards.

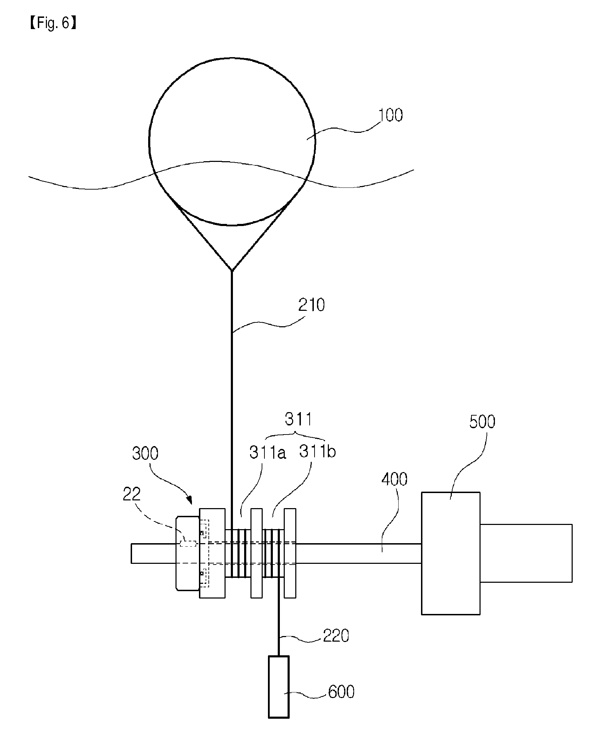

In addition, as shown in Fig. 6, the power transmission rope 210 is wound around one pulley of two-stage pulleys formed at one side of the power transmission unit 300 provided spaced apart from the lower side of the float 100 by a predetermined distance, and the return rope 220 is wound around the other pulley in a direction opposite to the power transmission rope 210 and connected to the return mechanism 600. At this time, the return mechanism 600 may be configured at a lower side of the power transmission unit 300.

Moreover, the power transmission shaft 400 is coupled to the power transmission unit 300, and the generator 500 is coupled to one side of the power transmission shaft 400. At this time, the power transmission shaft 400 is coupled to transmit a rotating force to the power transmission shaft 400 only when the power transmission unit 300 rotates in one direction. In other words, the power transmission unit 300 is configured to transmit a rotating force to the power transmission shaft 400 only in a rotating direction when the float 100 moves upward by a tide to pull the power transmission rope 210.

In addition, the return rope 220 is connected to the return mechanism 600, and when the float 100 moves upwards to pull the power transmission rope 210, the return rope 220 plays a role of returning to the original position.

Therefore, if the float 100 floating on a sea surface by buoyancy moves upwards by a tide as shown in Fig. 4, the power transmission rope 210 is pulled so that the power transmission unit 300 rotates, and the power transmission unit 300 transmits a rotating force to the power transmission shaft 400 so that the generator 500 is operated to produce electricity.

On the contrary, if a tide descends so that the float 100 moves down as shown in Fig. 5, the power transmission rope 210 droops down. At this time, due to the return mechanism 600, the power transmission rope 210 is always pulled to keep tight.

The wave power generating apparatus 1000 as described above may be modified in various ways as described below.

If a single float 100 is provided, the function of the float may be entirely lost when the float 100 collides with a ship or any object floating on the sea. In order to prevent this situation, one or more floats 100 are bound to configure a single float 100, or compartments are formed in the float so that buoyancy of the float may be adjusted by discharging air from some compartment or the float may be evacuated under the water by discharging air from all compartments.

In addition, the float 100 has a hollow therein and includes a valve (not shown) formed at one side of the float 100 to adjust an inflow of air. Selectively, the float 100 may further include a balance tank (not shown). This configuration allows the buoyancy of the float 100 to be adjusted, and in case of a strong tide, this configuration allows the float 100 to be evacuated under the sea surface.

At this time, the float 100 may be more easily evacuated using the float vertical transfer device 700, as described later in detail.

In addition, the power transmission unit 300 may employ a one-directional latchet clutch 310.

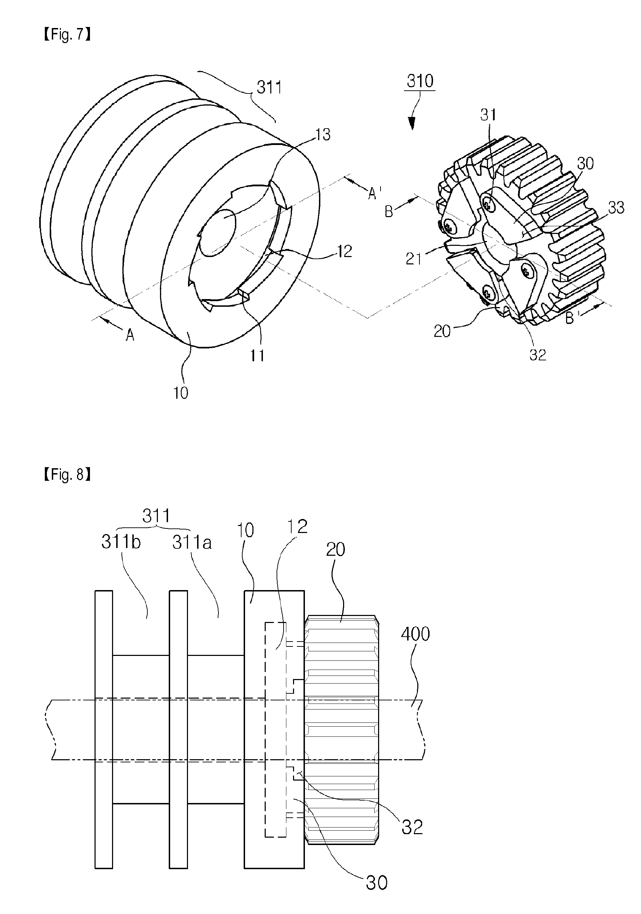

As shown in Figs. 7 and 8, the one-directional latchet clutch 310 may include: a disk-type latchet wheel 10 having a hollow formed at one side thereof and several latchets 11 formed at an inner circumference thereof; a pole fixing plate 20 having a disk shape; and several poles 30 of which one side is coupled to a predetermined circumference of one surface of the pole fixing plate 20 by means of a hinge 31, wherein the several poles 30 coupled to one side of the pole fixing plate 20 are coupled to be inserted into the inner side of the latchet wheel 10 where the latchets 11 are formed.

First, the latchet wheel 10 is formed with a disk shape and has a hollow at one side thereof, and several latchets 11 are formed at the inner circumference thereof. The latchet 11 has a gear tooth shape protruding inwards with teeth at regular intervals with a regular angle. In addition, an inner groove 12 may be formed inwards toward a shaft formed at the latchet 11, and a space may be formed therein. In this case, when the pole 30 is inserted, it is possible to prevent one surface of the pole 30 from contacting and interfering with the inner side of the latchet wheel 10.

In addition, the pole fixing plate 20 has a disk shape, and the power transmission shaft 400 and the pole fixing plate 20 transmit power by means of a key 22, and the several poles 30 are coupled to one surface of the pole fixing plate 20. At this time, the plurality of poles 30 is arranged at one surface of the pole fixing plate 20 with the same angle along the same circumference.

Moreover, the number of the latchets 11 may be equal to the number of the poles 30 or multiple of the number of the poles 30.

In addition, the poles 30 are fixed by a hinge 31 at one end thereof and coupled to be rotatable based on the hinge 31, so that an end portion 33 of the pole 30 may rotate inwards and outwards in a radial direction of the pole fixing plate 20.

Therefore, the several poles 30 are coupled to the pole fixing plate 20, and when the several poles 30 coupled to the pole fixing plate 20 are coupled to be inserted into the latchet wheel 10 and rotates in one direction as shown in Fig. 8, the rotating force is transmitted. Meanwhile, if the several poles 30 rotate in an opposite direction, they rotate idle.

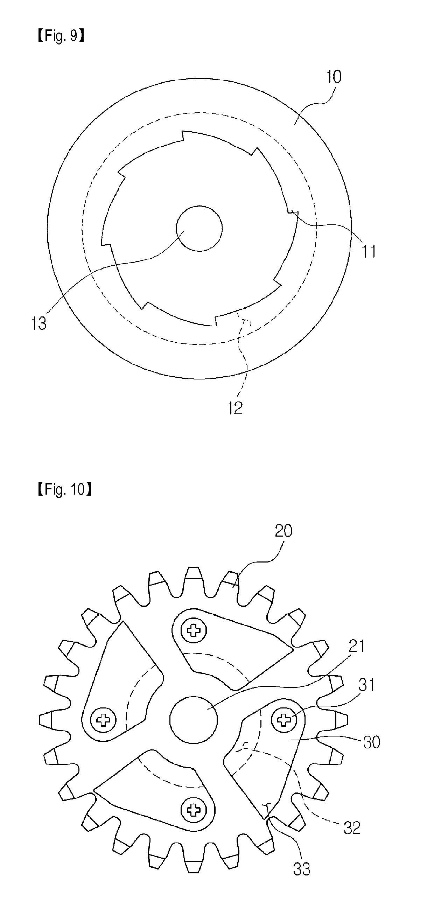

In addition, with reference to Fig. 9, the latchet wheel 10 has several latchets 11 along the hollow inner circumference, and the latchets 11 are formed to have a predetermined angle to the central direction of the latchet wheel 10 so that the poles 30 hooked by the latchet 11 are not taken off toward the center when rotating.

Moreover, the end portion 33 of the poles 30 may be formed with an angle corresponding to the latchet 11 so as to be accurately hooked by the latchet 11 as shown in Fig. 7.

In addition, the several poles 30 may further have mount grooves 32 formed at an inner side of a side thereof contacting the pole fixing plate 20 in a radial direction, so that an elastic unit 40 is inserted into the mount grooves 32.

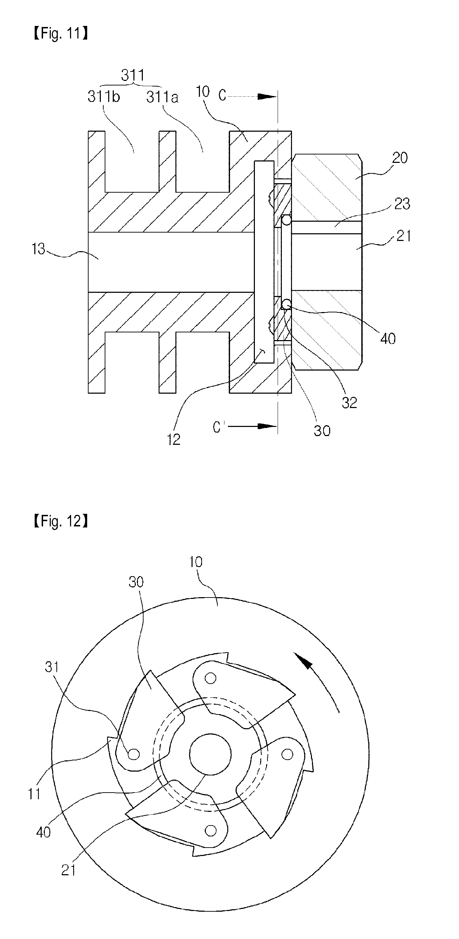

In other words, as shown in Figs. 10 and 11, the mount grooves 32 are respectively formed inwards in a radial direction at the surface of the poles 30 contacting the pole fixing plate 20.

In addition, the elastic unit 40 having a circular shape is inserted into the mount groove 32 of the poles 30 so that several poles 30 are supported by a single elastic unit 40. Therefore, when the latchet wheel 10 rotates in a counterclockwise direction as shown in Fig. 12, the poles 30 are pulled outwards so that the poles 30 are hooked by the latchet 11 of the latchet wheel 10.

For this reason, in a hooked state, the latchet wheel 10, the pole 30 and the pole fixing plate 20 rotate together. Therefore, if a rotating force is applied to the latchet wheel 10, the rotating force is also transmitted to the pole fixing plate 20 to rotate together. At this time, the elastic unit 40 has a circular shape as shown in Fig. 12 since the poles 30 are pulled outwards.

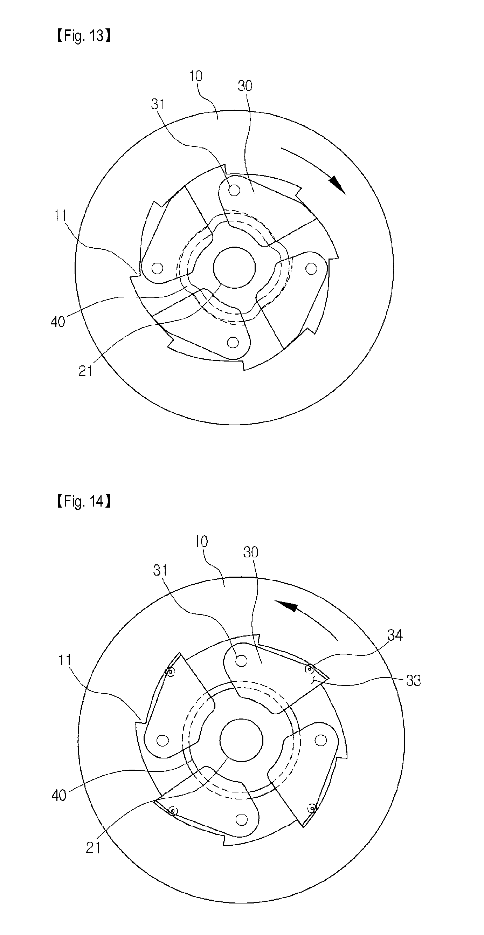

On the contrary, when the latchet wheel 10 rotates in a clockwise direction as shown in Fig. 13, the poles 30 gather toward the center and the poles 30 slide over the latchet 11 of the latchet wheel 10. At this time, the elastic unit 40 gathers inwards by the poles 30 and has a crushed shape as shown in Fig. 13, thereby applying an elastic force to push the poles 30 outwards.

In addition, the elastic unit 40 may be an O-ring. At this time, the O-ring is inserted into the mount groove 32 of the poles 30, the wire diameter of the O-ring should be smaller than the width of the mount groove 32 so that the poles 30 may freely move and the outer diameter of the O-ring may be sized so that the O-ring is inserted into the mount groove 32 of the poles 30 and hooked by the latchet 11 of the latchet wheel 10 in a state where the poles 30 are pushed outwards.

Moreover, the O-ring may have excellent elasticity so as to continuously push the poles 30 outwards, for example general natural or synthetic rubbers as well as synthetic resins or fluorine resins strong against acid, alkali and sea water.

Therefore, the above configuration including the latchet wheel, the pole and the pole fixing plate is simple and may reduce a manufacture cost.

In addition, since the mount groove is formed at the pole and the elastic unit is inserted therein, several poles may be supported by a single elastic unit simultaneously, which ensures a simple structure while securely controlling the rotating force.

Moreover, since the elastic unit employs an O-ring, the elastic unit may have improved durability and corrosion resistance and therefore be available in the water and sea.

In addition, a rotating roller 34 is coupled to the end portion 33 of the pole 30. The rotating roller 34 is provided on a surface of the pole 30 which contacts the latchet 11, and a groove is formed at the end portion of the pole 30 so that the rotating roller 34 is inserted therein to partially protrude therefrom and therefore rotatably fixed by a pin or a shaft and coupled to the pole 30.

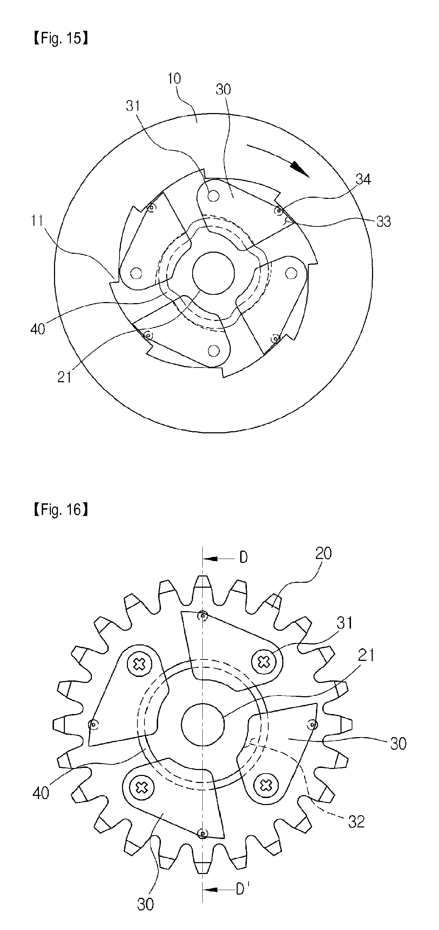

In other words, when the latchet wheel 10 rotates in a clockwise direction, the poles 30 causes friction while sliding over the latchets 11. Therefore, as shown in Figs. 14 to 17, the rotating roller 34 is coupled to partially protrude on the outer side of the end portion 33 of the pole 30 in a radial direction, thereby preventing abrasion of the latchet 11 and the poles 30 and extending a life cycle.

At this time, when the latchet wheel 10 rotates in a counterclockwise direction as shown in Fig. 14, the rotating roller 34 may be coupled with a height selected so that the end portion of the pole 30 may be hooked by the latchet 11.

In addition, a shaft hole 13 may be formed at the center of the latchet wheel 10, and a shaft coupling hole 21 may be formed at the center of the pole fixing plate 20. In other words, the shaft hole 13 is formed at the center of the latchet wheel 10 so that the power transmission shaft 400 may pass therethrough, and the shaft coupling hole 21 is formed at the center of the pole fixing plate 20 so that the power transmission shaft 400 may be inserted and fixed thereto.

Therefore, when the power transmission shaft 400 is coupled to the one-directional latchet clutch 310, the latchet wheel 10 comes to a state separated from the power transmission shaft 400, and the pole fixing plate 20 comes to a state fixed to the power transmission shaft 400 to rotate together.

At this time, if a rotating force is applied to the latchet wheel 10 in one direction, in a state where the latchet 11 of the latchet wheel 10 is hooked to pole 30, the power transmission shaft 400 fixed to the pole fixing plate 20 rotates together to transmit the rotating force. On the contrary, in a state where the pole 30 slides over the latchet 11, only the latchet wheel 10 rotates idle.

In addition, in order to fix the power transmission shaft 400 to the latchet wheel 10 or the pole fixing plate 20, various fixing means such as a key, a bolt, a taper pulley, a power lock or the like commonly used in the art may be applied, though not described in detail here.

Moreover, a shaft hole 13 may be formed in the latchet wheel 10, and the shaft hole 13 of the latchet wheel 10 may be formed with a great size and a bearing may be inserted therein so that the latchet wheel 10 may easily rotate idle in a state where the power transmission shaft 400 passes therethrough.

In addition, when the power transmission shaft 400 passes through or is inserted into the latchet wheel 10 and the pole fixing plate 20, the inner surface may be formed so that the poles 30 do not interfere with the power transmission shaft 400 in a state where the poles 30 are arranged circularly and gather inwards in a radial direction not to be hooked by the latchet 11.

Moreover, in order to reduce a friction at the contact surfaces of the latchet wheel 10 and the pole fixing plate 20, an oil-less bush or a graphite plate may be inserted or coupled to any one of the contact surfaces, and in a case where a great load is applied toward the shaft, grooves may be respectively formed at the contact surfaces of the latchet wheel 10 and the pole fixing plate 20, and a thrust bearing may be coupled thereto.

In addition, as shown in Figs. 6 to 8, the one-directional latchet clutch 310 may include two-stage pulleys 311 formed at one side thereof, and the power transmission rope 210 may have one end coupled to the float 100 and the other end wound around one pulley of the two-stage pulleys 311. Moreover, the return rope 220 may have one end coupled to the return mechanism 600 and the other end wound around the other pulley of the two-stage pulleys 311, and the power transmission rope 210 and the return rope 220 may be wound around the two-stage pulleys 311 in different directions.

In other words, after forming the two-stage pulleys 311 at the one-directional latchet clutch 310, the power transmission rope 210 and the return rope 220 are wound around the first pulley 311a and the second pulley 311b in opposite directions, so that if any one rope is wound, the other rope is unwound. This principle is identical to a case where a single rope is used. However, if two ropes are used, sliding does not occur, different from a power transmission unit having a V belt and a V belt pulley, and therefore it is possible to ensure exact operation without a power loss.

In addition, since the one-directional latchet clutch 310 is used as the power transmission unit 300, corrosion may be prevented, which greatly improves operation in the sea water, in comparison to a bearing-type one-direction clutch used as a general power transmission unit.

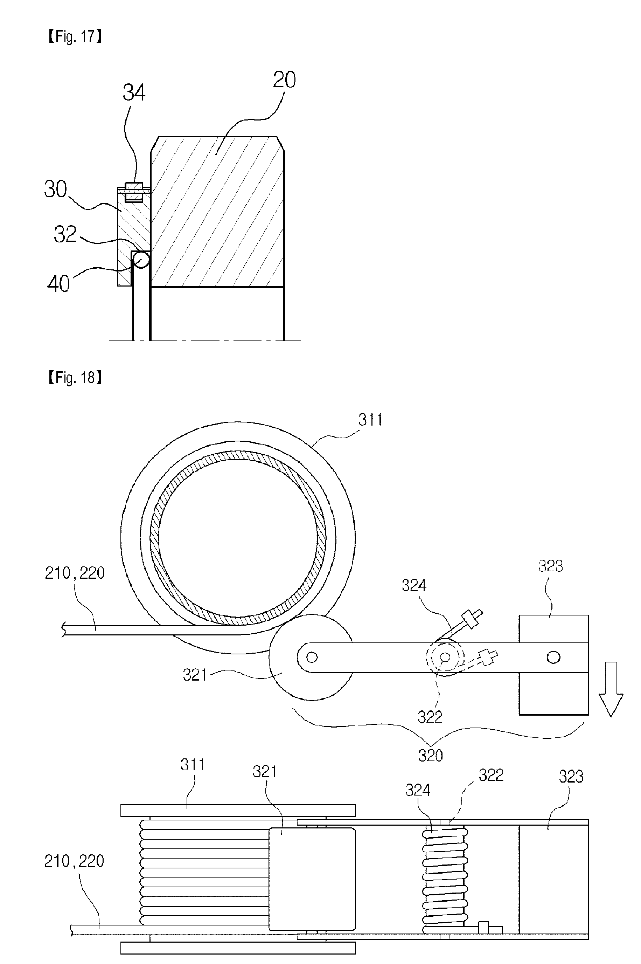

Moreover, the apparatus of the present disclosure may further include a contact roller unit 320 provided at one side of the two-stage pulleys 311 to closely adhere the power transmission rope 210 or the return rope 220 wound around the two-stage pulleys 311. If the float 100 moves downwards, the power transmission rope 210 may loose and therefore be tangled or twisted when being wound around the two-stage pulleys 311. The contact roller unit 320 may prevent this phenomenon by pushing the power transmission rope 210 close to the pulley. At this time, as shown in Fig. 18, the contact roller unit 320 may allow the roller 321 to closely adhere the power transmission rope 210 or the return rope 220 to the two-stage pulleys 311 by forming a ballast 323 at a side opposite to the roller 321 based on the central shaft 322 or providing a torsion spring 324 to the central shaft 322.

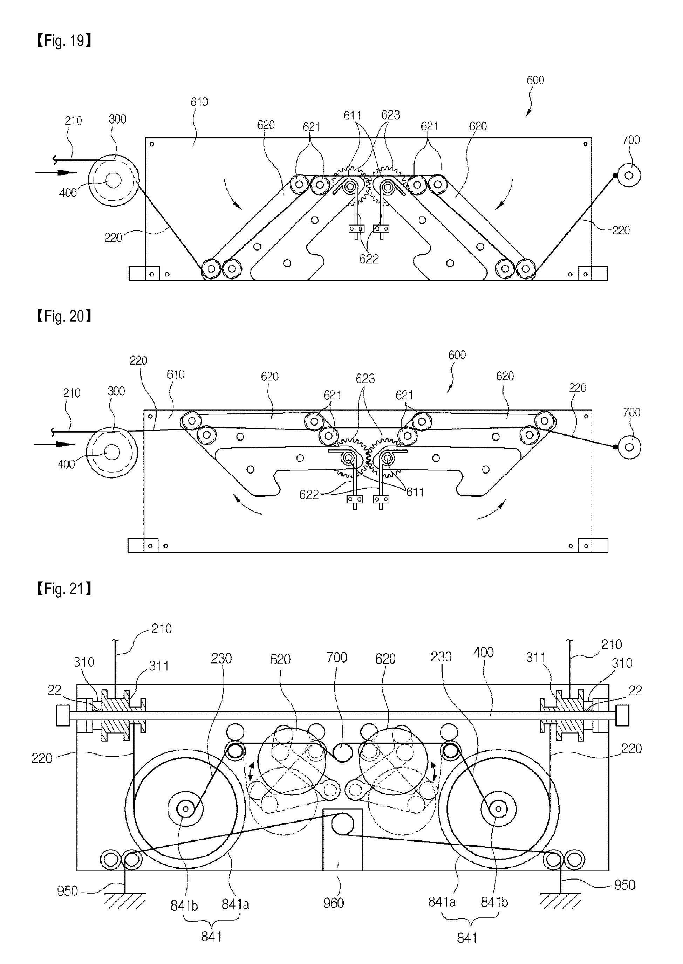

In addition, as an embodiment of the return mechanism 600, as shown in Fig. 19, the return mechanism 600 may include a pair of asymmetric pendulums 620 respectively coupled to one side of the fixed plate 610 by means of a hinge 611 to serve as a ballast, and rollers 621 coupled to both end portions of the pendulum 620, wherein the return rope 220 passes through the rollers 621 so that the length of the return rope 220 is adjusted by means of pendulum movement of the asymmetric pendulums 620, and wherein the end of the return rope 220 may be fixed to the fixed plate 610 or connected to the rope fixing shaft 710 and the float vertical transfer device 700 to be controlled. At this time, there may be provided several pendulums 620, and Fig. 19 shows that one pair of pendulums 620 is provided.

Moreover, the pendulum 620 is coupled by the hinge 611 at a portion inclined to one side to keep a state of pressing the return rope 220 by its weight, and if the float 100 moves upwards by a tide, as shown in Fig. 20, the return rope 220 is pulled and the pendulum 620 moves upwards while rotating based on the hinge 611.

On the contrary, if the float 100 moves downwards, the power transmission rope 210 droops and the pendulum 620 moves downwards while rotating as a role of a ballast and presses the return rope 220 so that the power transmission rope 210 is kept tight.

Moreover, a gear 623 is coupled to and engaged with the hinge 611 of the asymmetric pendulums 620. Therefore, the pair of asymmetric pendulums 620 is coupled to be engaged by the gear 623 to operate simultaneously, which ensures the pair of asymmetric pendulums 620 to operate more smoothly.

Here, a torsion spring 622 may be provided so that one end is fixed to the fixed plate 610 and the other side is fixed to the pendulum 620, which may give an additional restoring force by electricity.

In addition, the wave power generating apparatus may further include a reduction pulley 841 provided between the power transmission unit 300 and the return mechanism 600, wherein the reduction pulley 841 includes a first pulley 841a and a second pulley 841 b, the second pulley 841b has a smaller diameter than the first pulley 841a, both ends of the return rope 220 are wound around the power transmission unit 300 and the first pulley 841a of the reduction pulley 841, and the second return rope 230 has one end wound around the second pulley 841b and the other end coupled to the return mechanism 600.

The length of the return rope 220 capable of being pulled by the return mechanism 600 is shorter than the length of the power transmission rope 210 to be wound by the vertical movement of the float 100 according to a tide. In other words, the length of the return rope 220 to be pulled is shortened due to a spatial limitation.

Therefore, as shown in Fig. 21, the reduction pulley 841 composed of the first pulley 841a having a greater diameter and the second pulley 841 b having a smaller diameter is additionally installed, both ends of the return rope 220 are respectively wound around the power transmission unit 300 and the first pulley 841a, and one end of the second return rope 230 is wound around the second pulley 841b and the other end is coupled to the return mechanism 600. Therefore, even though the length of the power transmission rope 210 wounded or unwounded by the vertical movement of the float 100 is long, the length of the return rope 220 to be pulled by the return mechanism 600 by means of the reduction pulley 841 may be short, which allows a compact configuration of the return mechanism 600.

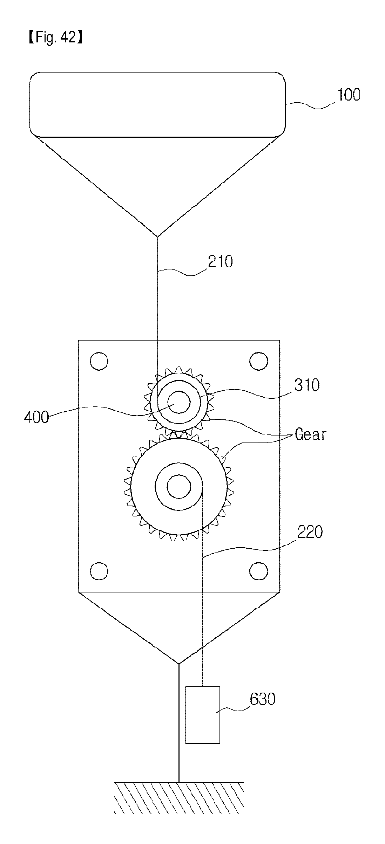

In addition, a method for obtaining the effect of the reduction pulley as shown in Fig. 21 by using a reduction gear will be described in more detail with reference to Fig. 42. A gear reduction device is provided between the power transmission unit 300 and the return mechanism 600 so that one end of the return rope 220 is wounded around an end of the pulley and the other end of the return rope 220 is coupled to the return mechanism 600

Moreover, the wave power generating apparatus 1000 including the return mechanism 600 may further include a float vertical transfer device 700 provided at one side of the return mechanism 600 so that the return rope 220 is coupled thereto. This means that the return rope 220 passing between the rollers 621 of the return mechanism 600 is fixed to the float vertical transfer device 700, so that the height of the float 100 may be adjusted according to the change of the sea surface by operating the float vertical transfer device 700 to wind or unwind the return rope 220.

Therefore, since it is possible to move the float 100 upwards or downwards by using the float vertical transfer device 700, even though the height of the sea surface changes due to a great tide, power may be efficiently generated by adjusting the height of the float 100. In addition, in case of a great tide, if the return rope 220 is pulled to the end by operating the float vertical transfer device 700, the float 100 may be evacuated below the sea surface in a simple way. At this time, the float 100 may be more easily evacuated below the sea surface if buoyancy of the float 100 is adjusted by using a valve and a balance tank formed at the float 100.

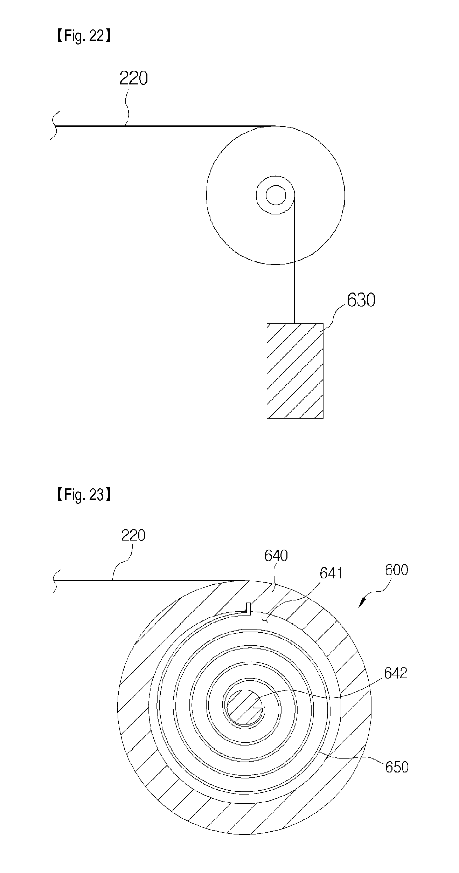

In addition, as another embodiment of the return mechanism 600, referring to Fig. 22, the return mechanism 600 may be a ballast 630 to which the other end of the return rope 220 is coupled. In other words, one end of the return rope 220 is wound around the power transmission unit 300 and the other end is coupled to the ballast 630, so that the return rope 220 may be restored by the weight of the ballast 630. At this time, even though Fig. 22 depicts that the ballast is provided at the lower side of the power transmission unit 300 by using a roller, the ballast may also be provided at a side of the power transmission unit 300, which ensures easy manufacture with a simple structure and less malfunction.

As still another embodiment of the return mechanism 600, as shown in Fig. 23, the return mechanism 600 may have hollow 641 formed at the inner side of a roller 640 so that one end of a clockwork spring 650 is fixed to the roller 640 and the other end is fixed to a shaft 642, and the return rope 220 may be wound around the roller 640. In other words, if the float 100 moves upwards, the roller 640 rotates by the return rope 220 wound around the roller 640, and elasticity is applied to the clockwork spring 650 in a state where the shaft 642 is fixed. If the float 100 moves downwards, the power transmission rope 210 droops so that the roller 640 rotates by the elasticity of the clockwork spring 650, and the return rope 220 is wound around the roller 640 to keep tight.

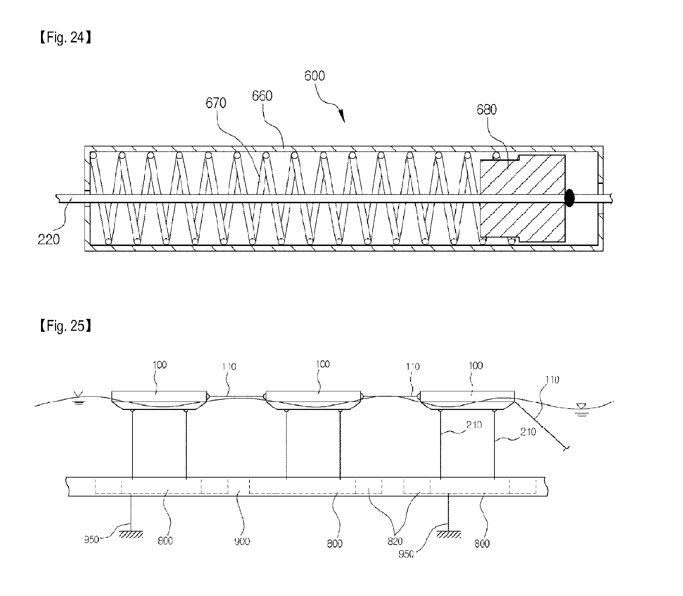

As further another embodiment of the return mechanism 600, as shown in Fig. 24, the return mechanism 600 may include: a pipe 660 having a hollow formed therein; a coil spring 670 provided in the pipe 660; and a sliding block 680 provided in the pipe 660 to contact the coil spring 670, the return rope 220 being fixed to the sliding block 680. In other words, if the return rope 220 fixed to the sliding block 680 is pulled, the coil spring 670 is compressed to generate elasticity, and if the power transmission rope 210 droops, the return rope 220 is pulled and restored by the elasticity of the coil spring 670 to keep a tight state.

In addition, as shown in Fig. 25, the wave power generating apparatus 1000 may include a main body 800 for accommodating the power transmission unit 300, the power transmission shaft 400, the generator 500 and the return mechanism 600, and a frame 900 supporting several main bodies 800 and having one side at which a balance tank 820 and a frame vertical adjustment device 960 are formed, wherein the balance tank 820 is formed at one side of the frame 900 or the main body 800.

At this time, the balance tank 820 may be formed with a hollow to generate buoyancy so that the inside may be filled with air, and a valve (not shown) may be formed at one side of the balance tank 820 to inject or eject air. In addition, the balance tank 820 may be filled with Styrofoam to generate buoyancy, and the balance tank 820 may be divided into two spaces so that one space is filled with air to always generate buoyancy and the other space has a valve at one side to adjust the buoyancy.

The frame 900 includes several frame cells 910 stacked side by side, end plates 920 coupled to both sides of an outer surface of an outermost frame cell 910 of the frame cells 910, and a fastening unit 930 coupled to the frame cell 910 through the end plate 920.

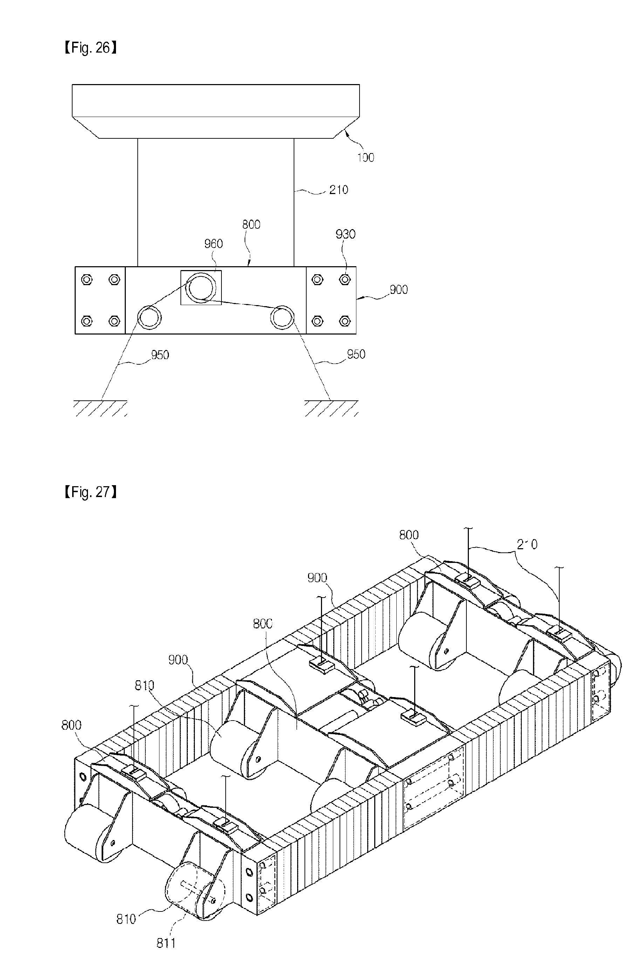

In addition, as shown in Figs. 26 to 30, the frame 900 may include a balance tank and a frame vertical adjustment device 960 provided at a space between one pair of frame cell 910 connected with a plate to adjust buoyancy with the main body, and both ends thereof may be connected by a hinge.

Moreover, the frame vertical adjustment device 960 is connected to the seabed by a frame support rope 950, so that the main body 800 and the frame 900 may submerge or float for repair by adjusting the length of the frame support rope 950 connecting the frame 900 to the seabed by the frame vertical adjustment device 960.

In addition, even though the frame 900 may have a frame shape like an H beam, the frame 900 may have a rectangular pipe shape or a hollow pipe shape and include the balance tank 820 therein for structural advantage.

In an another example of the frame 900, stainless plates are placed to both ends thereof, and plates made of elastic material are closely adhered between them by using several long bolts and nuts. Both ends have joints. In this case, a structural moment generated by a tide is offset in the frame, which enhances the safety of the wave power generation system.

In addition, even though a single long frame 900 may be used, several frames may be provided so that both ends of the frames are coupled by hinges 940. In this case, the frames may be fabricated easily, and when a failure occurs, only a frame with the failure may be repaired.

In another embodiment of the frame 900, the frame 900 includes a plurality of frames arranged in parallel at regular intervals, and the float 100 is connected to each wave power generating apparatus 1000 by means of the power transmission rope 210.

If the wave power generation system is very large and the float 100 also has a large size, the frame 100 located below the float 100 does not have a great corresponding to the width of the float 100 but several frames may be installed at regular intervals. Even though the float 100 has a very great width, several frames 900 with a small size may be installed. During the movement, if the power transmission rope 210 is pulled to the end, the float 100 may be closely adhered to the frames 900 integrally. Therefore, the entire power generation system may be assembled as a single structure and then moved. At this time, the frames installed in parallel may not be connected to each other.

Referring to Figs. 25 and 26, the frame vertical adjustment device 960 may float the frame 900 on the water surface or move down to the seabed by adjusting the length of the frame support rope 950 connected to the seabed. In order to float the frame 900 on the water surface, air is put into the balance tank 820, and the frame support rope 950 is unwound so that the frame 900 is floated on the water surface to repair the wave power generation system. At this time, the float 100 is connected to the float support rope 110 not to be swept away.

In addition, the frame vertical adjustment device 960 may operate by a hydraulic pressure or by using a reduction gear. If a worm reduction gear is used, the worm reduction gear may be used for smooth operation and stopping (a role of a brake) since the work reduction gear operates only at an operating shaft and does not move at a driven shaft. In this case, a valve and a balance tank 820 may be provided at one side of the frame 900 to inject air, so that the frame 900 is installed on the seabed or in the water when generating power. However, when the power generation system malfunctions, air is injected into the balance tank 820 and the frame support rope 950 is unwound by using the frame vertical adjustment device 960 to float on the water surface. After that, the frame may be pulled by a ship to a repair station.

Therefore, when the wave power generating apparatus malfunctions or operates abnormally, the frame 900 may be inspected and repaired on the water without directly submerging to the seabed.

In addition, the wave power generating apparatus may include a plurality of moving wheels 810 formed at the main body 800 and a hollow 811 formed in the moving wheels 810.

As shown in Fig. 27, the plurality of moving wheels 810 are formed at the main body 800 of the wave power generating apparatus 1000 so that the main body 800 may be easily carried to be installed at the sea after being manufactured. When the wave power generating apparatus is installed in the sea, the hollow 811 formed in the moving wheel 810 plays a role of generating buoyancy so that the main body 800 and the frame 900 are connected to the seabed by the frame support rope 950 and float at a predetermined height. In other words, the hollow 811 of the moving wheel 810 may plays a role of a balance tank.

In addition, the frame 900 and the seabed may be connected by means of a plurality of frame support ropes 950 provided in the horizontal direction.

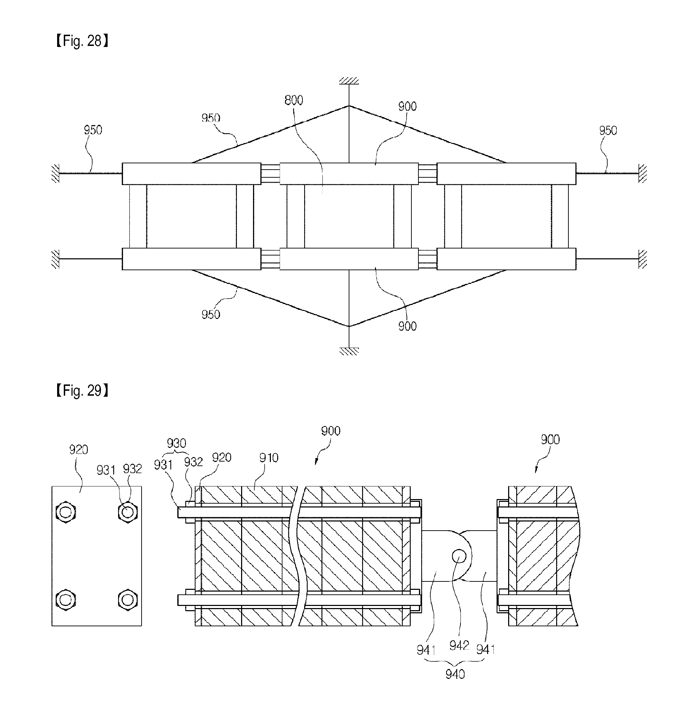

In other words, as shown in Fig. 28, the side of the frame 900 may be connected to the seabed by means of a plurality of frame support ropes 950 to prevent the frame 900 from moving or being swept away by a tide. In addition, if the frame 900 is long, this configuration may prevent the frame 900 from being bent by a tide. At this time, if the buoyancy of the balance tank 820 is adjusted, the main body 800 and the frame 900 may be adjusted to float or sink on the seabed without using the frame vertical adjustment device 960.

In addition, the frame 900 may include: several frame cells 910 stacked side by side; end plates 920 coupled to both sides of an outer surface of an outermost frame cell 910 of the frame cells 910; and a fastening unit 930 coupled to the frame cell 910 through the end plate 920.

Moreover, several frames 900 may be arranged in the length direction so that the frames 900 are coupled by hinges 940 to configure a long frame, and the frame cell 910 may be made of elastic material.

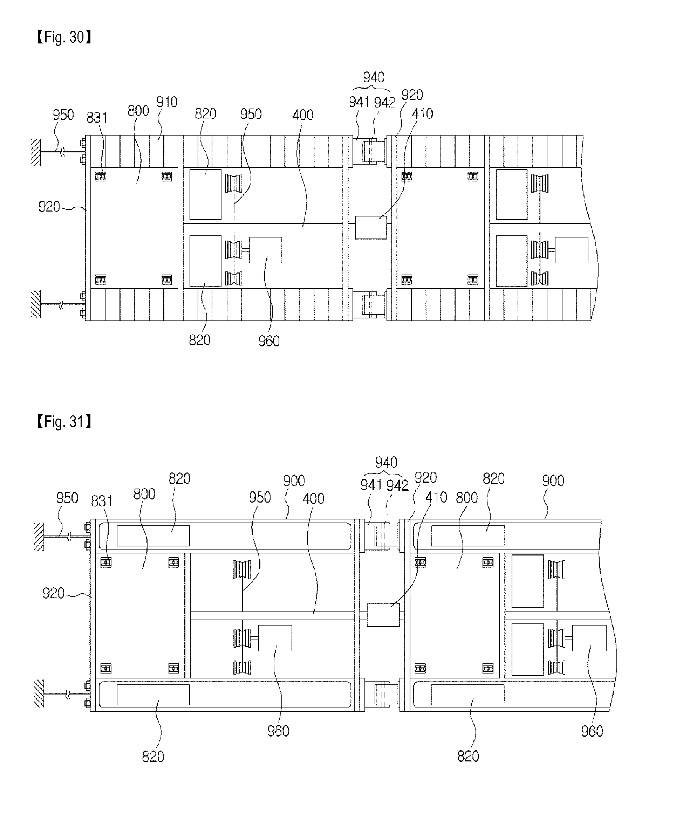

In other words, as shown in Fig. 31, after the plurality of frame cells 910 are stacked, a bolt 931 serving as the fastening unit 930 is provided through them so that both sides thereof are fixed by nuts 932 to configure the frame 900. In addition, connection bracket 941 are formed at the end plates 920 of the frames 900 and combined and connected long by pins 942. Moreover, if the frame cell 910 is made of urethane which is elastic material, the frame 900 may be formed more flexibly.

At this time, the entire frame 900 may be configured as a single body. However, if the frame 900 is made of hard material, a great moment is generated in view of structural mechanics even though just a small force is applied, which result in a weak structure. In order to solve this problem, if several short frames are prepared and jointly connected, it is possible to prevent a great moment from being generated, and only a failed frame may be selectively repaired.

In addition, even though the frame 900 may be entirely made of a long single frame, several frames may also be provided so that both ends of the frames are connected by hinges, which ensures easy fabrication and allows only a failed frame to be selectively repaired.

Therefore, referring to Fig. 30, several frame cells 910 may be stacked and fixed by the end plate 920 and the fastening unit 930 to form one pair of frames 900, and the main body 800 may be provided between the frames 900 so that the balance tank 820 is formed at one side thereof.

In addition, the frame vertical adjustment device 960 may be formed at one side of the main body 800, and the power transmission shaft 400 may be extended to the outer side of the main body 800 to configure the wave power generating apparatus. After that, several wave power generating apparatuses may be connected. In other words, several wave power generating apparatuses may be connected in series by connecting the frames 900 with the hinge 940, connecting the frame support rope 950 respectively to the frame vertical adjustment device 960 and the seabed, and connecting the power transmission shafts 400 by a universal joint 410. At this time, the wave power generating apparatus may be fixed not to be swept away by connecting another frame support rope 950 to one side of the frame 900 or the main body 800 and fixing it to the seabed.

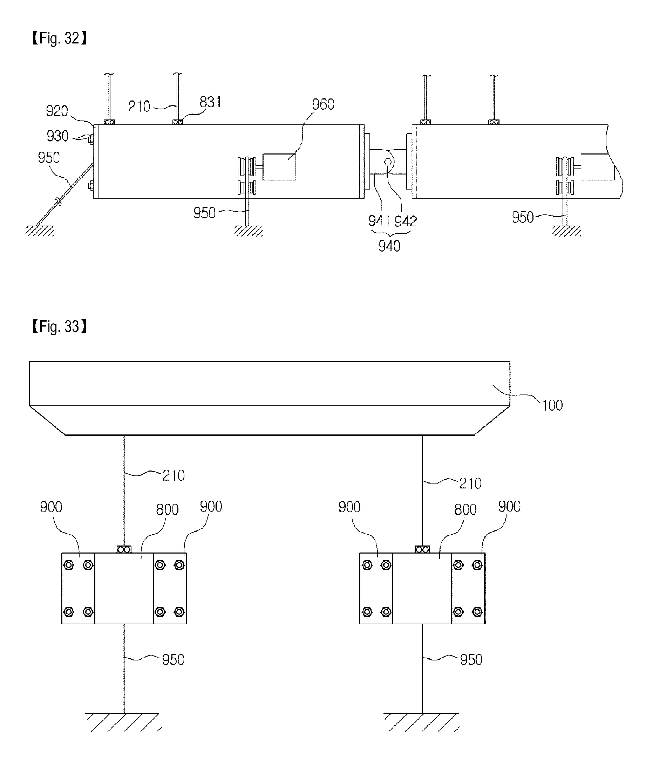

In addition, as shown in Figs. 31 and 32, the frame 900 may be formed with a hollow pipe shape, so that the balance tank 820 is included therein.

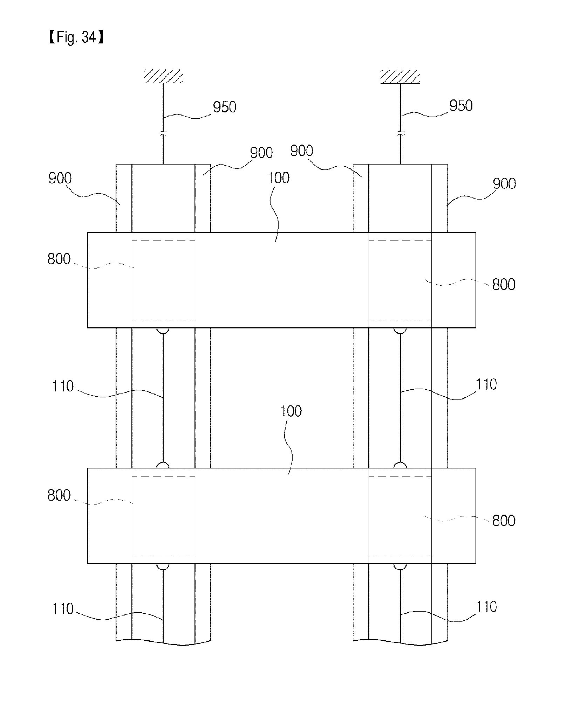

Moreover, as shown in Figs. 33 and 34, one pair of wave power generating apparatuses 1000 may be arranged in parallel with a regular interval, and the float 100 may be connected to each of the wave power generating apparatuses 1000 by the power transmission rope 210. In other words, if the wave power generating apparatus has a large size, several wave power generating apparatuses may be connected long in series and arranged side by side in parallel, and then several floats 100 may be respectively connected to the power transmission units 300 of the wave power generating apparatuses by the power transmission ropes 210.

In addition, in the frame 900, a plurality of frame cells 910 may be stacked side by side, the penetration rope 913 may be coupled through the frame cells 910, and a part of the frame cells 910 has a hollow and having the rope fixing unit 910a therein so that the penetration rope 913 is fixed to the frame cell 910 by a fixture 914.

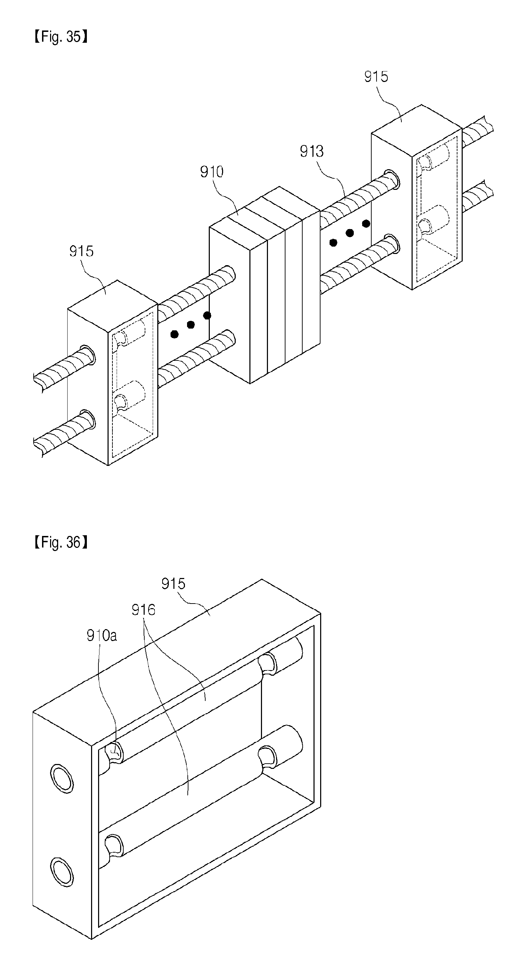

Referring to Figs. 27, 35 to 37 and 43, the frame cells 910 disposed at the outermost side or coupled to the main body 800 include rope fixing units 910a provided in main body frame cells 915 to fix the penetration ropes 913, and the frame cells 910 disposed between them employ frame cells 910 made of elastic material such as urethane. Therefore, by placing the penetration rope 913 therethrough and then fixing to the fixing unit 910a of the main body frame cell 915 by means of a fixture 914, the penetration rope 913 may be coupled to the main body frame cells 915. At this time, the rope fixing unit 910a may be configured as a pipe 916 in the main body frame cell 915 and have a cut portion formed at one side thereof. In addition, the fixture 914 may be closely fixed to the pipe 916 by pressing the penetration rope 913 at the cut portion, and may include a pressing plate for pressing the penetration rope 913, a U bolt surrounding the pipe and a nut for coupling the pressing plate to be closely adhered to the U bolt.

Hereinafter, configuration and operations of the wave power generating apparatus according to the present disclosure will be described.

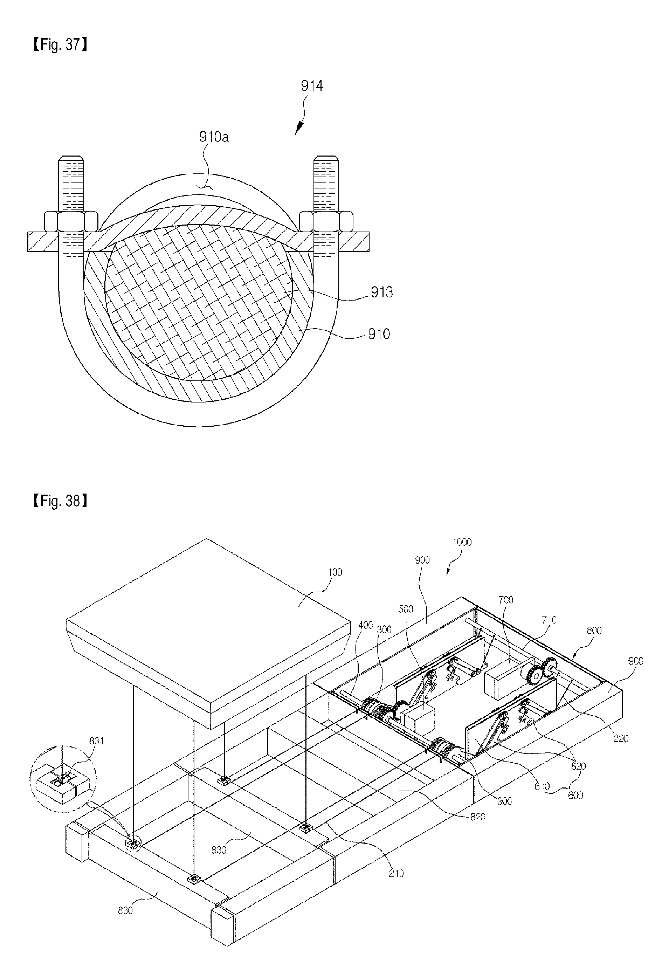

As an embodiment of the wave power generating apparatus according to the present disclosure, referring to Fig. 38, first, the power transmission unit 300, the power transmission shaft 400, the generator 500, the return mechanism 600 and the float vertical transfer device 700 are accommodated in the main body 800, and the float 100 is provided above the main body 800 to be apart therefrom by a predetermined distance.

In addition, the power transmission rope 210 is connected to the float 100 and wound around the power transmission unit 300 via a roller 831 provided at the connection plate 830, and the return rope 220 is wound around the power transmission unit 300 and fixed to the rope fixing shaft 710 via the return mechanism 600. At this time, the power transmission rope 210 and the return rope 220 are wound around the power transmission unit 300 in different directions, so that if any one rope is unwound, the other rope is wound.

Moreover, the rope fixing shaft 710 is coupled to the float vertical transfer device 700 and rotated by the float vertical transfer device 700 to wind or unwind the return rope 220, which allows the float 100 connected thereto to be evacuated under the water

In addition, the power transmission unit 300 is configured to transmit a rotating force to the power transmission shaft 400 by using the one-directional latchet clutch 310 when rotating in only one direction.

Therefore, if the float 100 moves upwards by a tide in a state of floating on the sea surface by buoyancy, the power transmission rope 210 is pulled and unwound from the first pulley 311a connected to the one-directional latchet clutch 310, and the return rope 220 is wound around the second pulley 311b and lifts the pendulum 620 of the return mechanism 600 upwards. At this time, the one-directional latchet clutch 310 rotates and transmits the rotating force to the power transmission shaft 400 so that the generator 500 operates.

In addition, if the tide descends to make the float 100 move downwards, the power transmission rope 210 droops. At this time, the pendulum 620 of the return mechanism 600 in an ascended position descends to press and pull the return rope 220 so that the power transmission rope 210 is wound around the first pulley 311a connected to the one-directional latchet clutch 260 to keep a tight state.

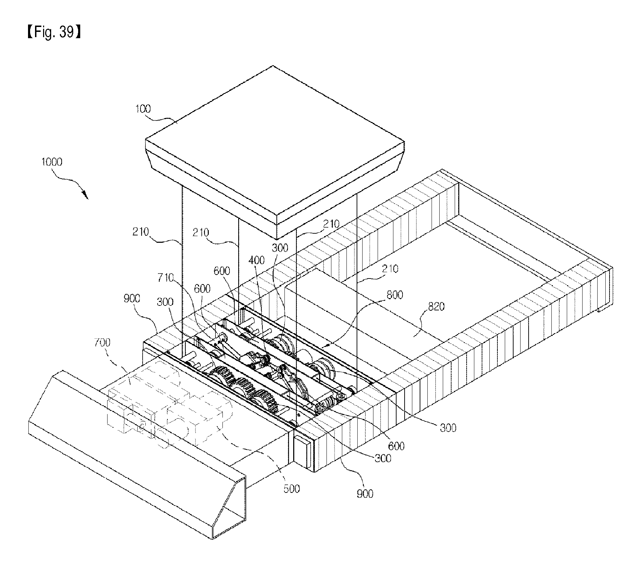

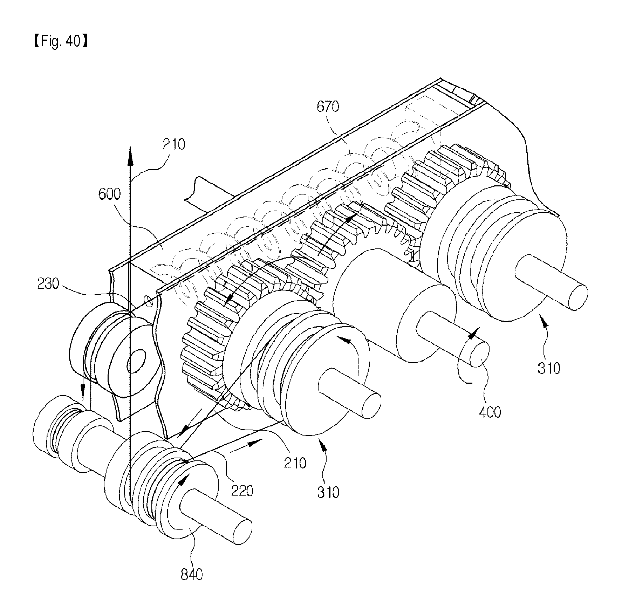

Moreover, as another embodiment of the wave power generating apparatus according to the present disclosure, referring to Figs. 39 and 40, first, the main body 800 is configured to accommodate the power transmission unit 300, the power transmission shaft 400 and the return mechanism 600. In addition, the frame 900 is formed to support and connects the main body 800 and another main body 800, and the float 100 is disposed above the frame 900 to be spaced apart therefrom by a predetermined distance. In addition, several power transmission units 300 are coupled to both sides of the power transmission shaft 400, and the generator 500 is coupled to one end of the power transmission shaft 400.

In addition, the power transmission unit 300 is configured to transmit a rotating force to the power transmission shaft 400 when rotating only in one direction by using the one-directional latchet clutch 310. At this time, an auxiliary roller 840 is provided to be spaced apart from one side of the power transmission unit 300 by a predetermined distance.

Moreover, the power transmission rope 210 connected to the float 100 is wound around the one-directional latchet clutch 310 via the auxiliary roller 840, both ends of the return rope 220 are wound around the one-directional latchet clutch 310 and the auxiliary roller 840, and the second return rope 230 is connected to one side of the auxiliary roller 840 to be connected to the return mechanism 600.

At this time, the return mechanism 600 may be configured by extending the second return rope 230 and using a direction-changing roller so as to use elasticity of the coil spring 670 and the weight of the pendulum 620 together.

Therefore, if the float 100 moves upwards by a tide, the power transmission rope 210 is pulled so that the power transmission rope 210 is unwound from the first pulley 311a connected to the one-directional latchet clutch 310. Since the second pulley 311b is wound in an opposite direction, the return rope 220 is wound to rotate the auxiliary roller 840, and the second return rope 230 connected to the auxiliary roller 840 pulls the return mechanism 600. At this time, the one-directional latchet clutch 310 rotates to transmit the rotating force to the power transmission shaft 400 so that the generator 500 operates.

In addition, if the tide descends so that the float 100 moves downwards, the power transmission rope 210 droops. At this time, the second return rope 230 is pulled by the return mechanism 600 to rotate the auxiliary roller 840, and the power transmission rope 210 is wound around the first pulley 311a connected to the one-directional latchet clutch 310 by the auxiliary roller 840 to keep a tight state.

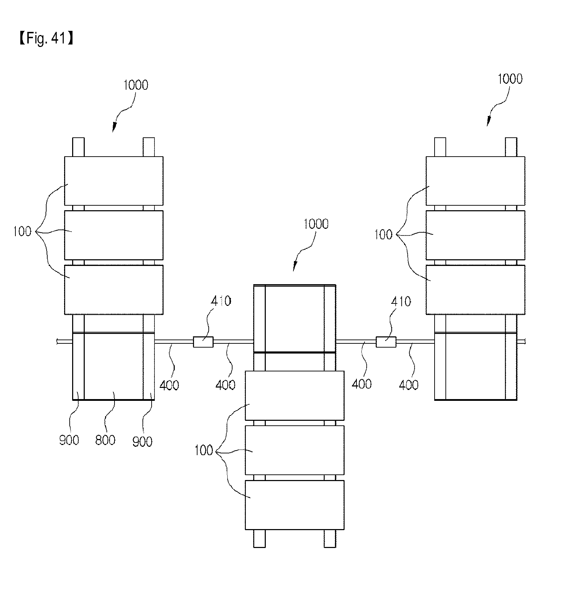

Moreover, the wave power generating apparatus 1000 according to the present disclosure may be configured by several wave power generating apparatuses 1000 as shown in Fig. 41. In other words, several floats 100 are connected to configure in the wave power generating apparatus 1000, and several wave power generating apparatuses 1000 are arranged side by side. After that, the power transmission shafts 400 may be connected long by the universal joint 410 to configure a wave power generating apparatus which may also serve as a seawall. In the wave power generating apparatus 1000, if a plurality of long and big floats 100 is used, wave energy surging by tsunami collides with the floats 100 and is converted into kinetic (tide) energy, during which the water level ascends. In addition, the increased kinetic energy of tsunami moves the floats 100 and exhausts as electric energy. In this way, it is possible to provide a wave power generating apparatus which may also serve as a tsunami shield by reducing the moving speed of tsunami surging toward the seashore.

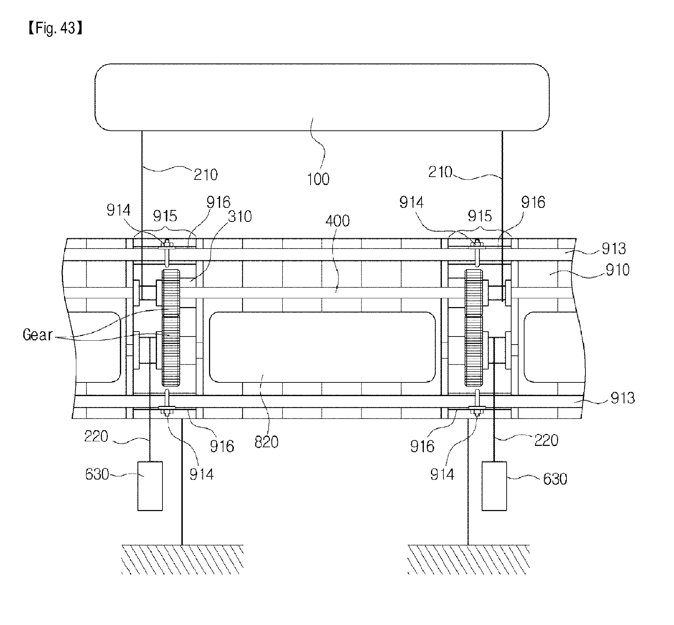

In addition, as an embodiment of the wave power generating apparatus according to the present disclosure, as shown in Figs. 42 and 43, the one-directional latchet clutch 310 and the reduction pulley 841 may be connected with gears having different teeth numbers so that the length of the power transmission rope 210 wound around the one-directional latchet clutch 310 is different from the length of the return rope 220 wound around the reduction pulley 841 according to the tooth ratio. In other words, even though the float 100 moves greatly in the vertical direction, the moving length of the ballast 630 serving as the return mechanism 600 may be configured short so that the main body 800 may be installed at a low position from the seabed.

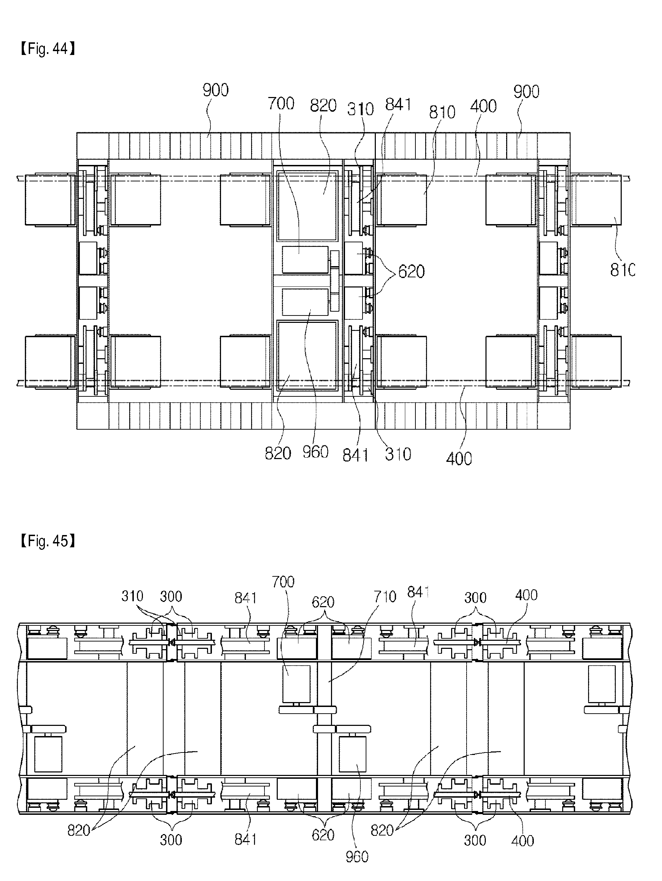

Moreover, the wave power generating apparatus according to the present disclosure may be configured in various ways. For example, as shown in Fig. 44, the main body 800 may be coupled between two rows of frames 900 formed side by side at regular intervals. In addition, as shown in Fig. 45, the main bodies 800 may be provided long in series, and the power transmission shafts 400 are connected by universal joints or the like and disposed in two rows so that the float vertical transfer device 700, the frame vertical adjustment device 960 and the balance tank 820 are provided between them.

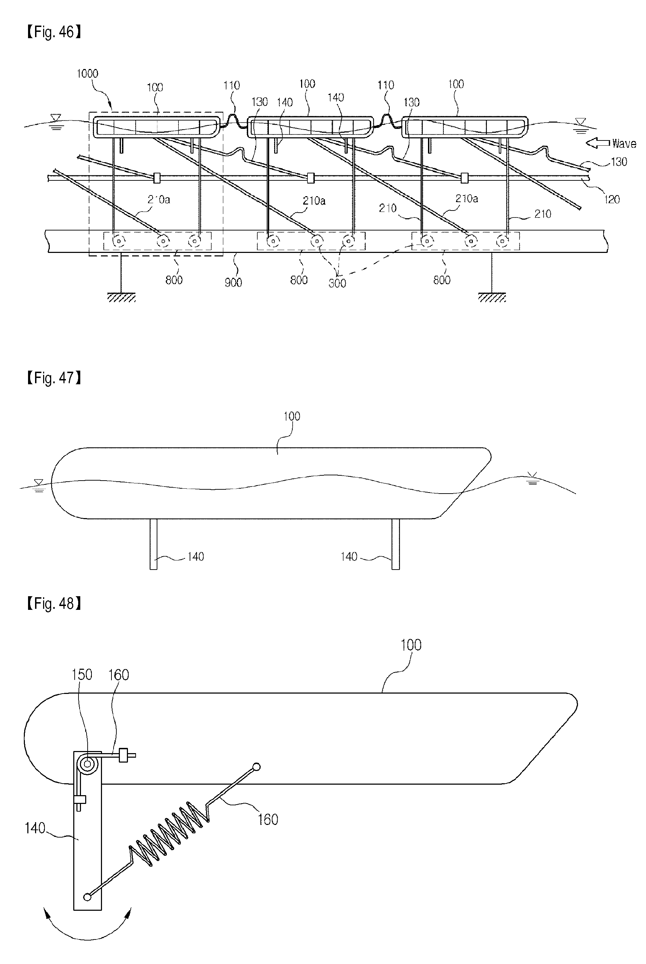

In addition, regarding the wave power generating apparatus according to the present disclosure, as shown in Fig. 46, a plurality of wave power generating apparatuses 1000 may be connected in parallel, and the power transmission unit 300, the power transmission shaft 400, the generator 500 and the return mechanism 600 may be accommodated in the main body 800 of each wave power generating apparatus 1000 so that the plurality of main bodies 800 are connected to each other. In addition, the floats 100 may be connected to each other by the float support rope 110, and a plurality of inclined power transmission ropes 210a may be coupled with a slope so that one end thereof is wound around the power transmission unit 300 of the main body 800 and the other end thereof is coupled to an adjacent float 100.

First, a plurality of wave power generating apparatuses 1000 as described above is connected side by side, and the power transmission unit 300, the power transmission shaft 400, the generator 500 and the return mechanism 600 are accommodated in the main body 800. In addition, a plurality of main bodies 800 is disposed at the upper side of the seabed and connected to each other, and the floats 100 are connected to each other by the float support rope 110 so as not to be spaced apart from each other over a predetermined distance.

In addition, one side of the inclined power transmission rope 210a is wound around the power transmission unit 300 of the main body 800 and inclined with a slope so that the other side thereof is coupled to an adjacent float 100.

In other words, the inclined power transmission rope 210a is not connected to a float 100 positioned right above the main body 800 but is connected with a slope to a float 100 obliquely adjacent thereto or spaced apart therefrom. Therefore, when the float 100 receives a lateral force, the inclined power transmission rope 210a is pulled to rotate the power transmission shaft 400 so that the generator 500 operates.

In addition, the main support rope 120 may be horizontally disposed to be spaced apart from the lower side of the float 100 by a predetermined distance so that one end or both ends thereof are fixed to the seabed, and a branched support rope 130 of which both ends are coupled to the float 100 and the main support rope 120 may be connected thereto with a slope. The main support rope 120 is horizontally disposed at the lower side of the float 100 to be spaced apart therefrom by a predetermined distance so that one end or both ends thereof are fixed to the seabed, and the float 100 is connected to the main support rope 120 by the branched support rope 130 with a slope so as not to move over a predetermined distance in a lateral direction along which a tide flows. In other words, the float 100 moves in a lateral direction within a range in which the branched support rope 130 in a drooping state may be pulled tight, which pulls the inclined power transmission rope 210a so that the power transmission shaft 400 rotates to generate power.

Therefore, the wave power generating apparatus according to the present disclosure may generate power when the float 100 pulls the power transmission rope 210 according to a lateral motion of the tide, and may also generate power when the float 100 moves in a lateral direction due to a lateral tidal motion of the tide to pull the inclined power transmission rope 210a. Therefore, since a tidal motion of the tide and a lateral force of the tide may be used simultaneously, power may be generated more efficiently.

Hereinafter, various embodiments of the float 100 will be described.

As shown in Fig. 47, a collision plate 140 extending perpendicularly may be formed at a lower surface of the float 100. The collision plate 140 is formed at the lower surface of the float 100 to perpendicularly extend and, when a tide surges in a lateral direction, the collision plate 140 plays a role of converting the force of the time into kinetic energy of the float 100. The kinetic energy is transmitted to the power transmission unit 300 through the inclined power transmission rope 210a to rotate the power transmission shaft 400, thereby operating the generator 500. Therefore, a tide flowing in a lateral direction may be more efficiently used for generating power, thereby enhancing the energy production efficiency.

At this time, as shown in Fig. 48, one side of the collision plate 140 may be coupled to the float 100 by a hinge 150, and a torsion spring serving as an elastic unit 160 may be coupled to a hinged portion thereof so that one side of the elastic unit 160 is coupled to the float 100 and the other side is coupled to the collision plate 140. Therefore, the collision plate 140 is coupled to the float 100 by the hinge 150, and when a force is applied in a lateral direction by a tide, if an excessive external force is applied to the collision plate 140, the collision plate 140 may bent. If the tide becomes weak, the collision plate 140 restores its perpendicular state by the elastic unit 160. In other words, if a tide is strong, the collision plate 140 is bent at a predetermined angle to prevent damage, and if the tide becomes weak, the collision plate 140 keeps a perpendicular state again to use a lateral force of the tide. At this time, the elastic unit 160 may be modified variously by using a torsion spring, a coil spring, a hydraulic unit, an absorber or the like.

In addition, the float 100 may have one side inclined or rounded. As shown in Figs. 47 and 48, if one side of the float 100 is inclined, a force applied to the float 100 in a lateral direction may be converted into a vertical force to some degree, which allows pulling the power transmission rope 210 to generate power. In addition, if one side of the float 100 is rounded, when a force is applied to the float 100 in a lateral direction, resistance in a direction along which the float 100 moves may be reduced.

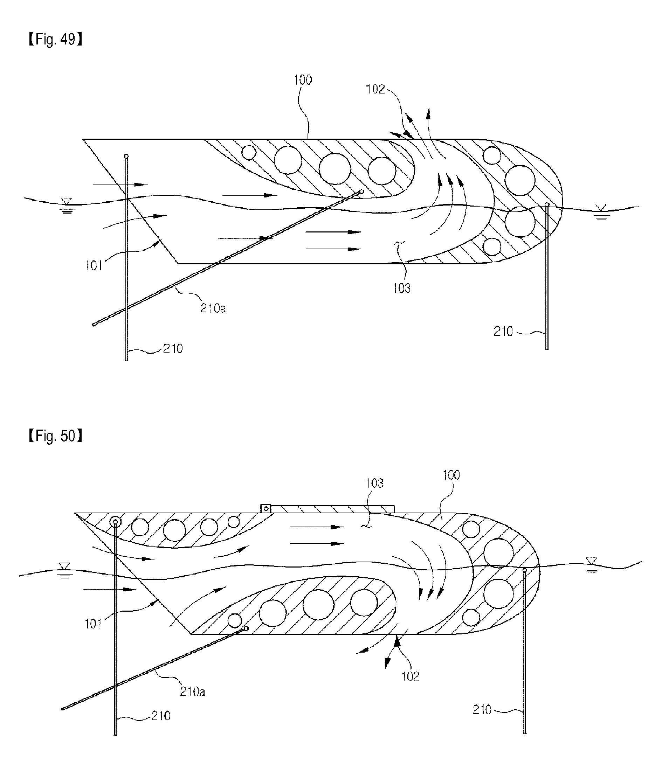

In addition, an inlet hole 101 may be formed at one side of the float 100 and an outlet hole 102 may be formed at an upper surface thereof, so that the inlet hole 101 and the outlet hole 102 communicate with each other. In this case, when a tide flows in a lateral direction, as shown in Fig. 49, seawater enters through the inlet hole 101 formed at one side of the float 100, flows along a channel 103 formed therein and discharges through the outlet hole 102 formed at the upper surface of the float 100. Therefore, the tide flowing in a lateral direction may be weakened, which may prevent erosion of the seashore caused by tides, allow the float to serve as a seawall, and give an effect of a fountain by ejecting seawater above the float 100. At this time, the outlet hole 102 should be smaller than the inlet hole 101 in order to eject a water stream higher.

In addition, the inlet hole 101 may be formed at one side of the float 100 and the outlet hole 102 is formed at the lower surface thereof, so that the inlet hole 101 and the outlet hole 102 communicate with each other. This configuration weakens a tide flowing in a lateral direction as described above, which may prevent erosion of the seashore caused by tides and serve as a seawall. Further, as shown in Fig. 50, since the outlet hole 102 is formed at the lower surface of the float 100, the float 100 may move upwards by a reaction of the water discharged through the outlet hole 102, which may pull the power transmission rope 210 to generate power. At this time, if a hole is also formed in the upper surface of the float 100 and is closed by an upper plate coupled to one side thereto by a hinge so that the upper plate is pressed by an elastic unit, when a strong tide is applied, the upper plate may be opened so that seawater may partially discharge through the hole formed in the upper plate, thereby preventing the float 100 and other units from being damaged.

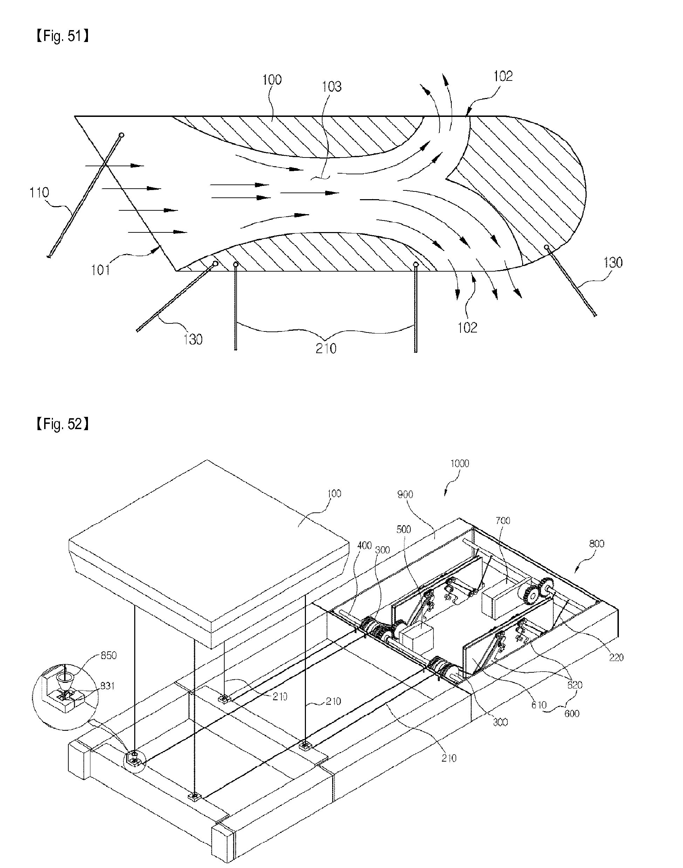

Moreover, the inlet hole 101 may be formed at one side of the float 100 and the outlet holes 102 may be respectively formed at the upper surface and the lower surface thereof, so that the inlet hole 101 and the outlet holes 102 communicate with each other. This is a combination of both floats 100 described above. As shown in Fig. 51, since seawater entering through the inlet hole 101 discharges through the outlet holes 102 in the upper and lower surfaces simultaneously, the float 100 becomes more stable, and an excessive force applied to the float 100 in a lateral direction may be reduced, which prevents the apparatus from being damaged.

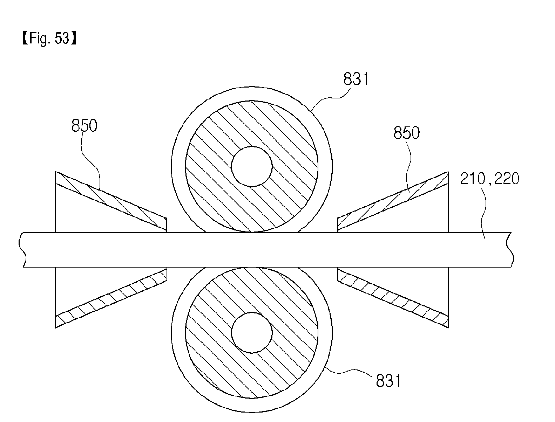

In addition, as shown in Figs. 52 and 53, horn-type guides 850 may be formed at both sides of the roller 831 by which the power transmission rope 210 or the inclined power transmission rope 210a passes, to be spaced apart from each other by a predetermined distance. In the case the power transmission rope 210 or the inclined power transmission rope 210a droops due to a tidal motion or a lateral movement of the tide, the rope may be deviated while being wound along the roller 831. However, the horn-type guide 850 may prevent this phenomenon. At this time, the horn-type guide 850 may be installed at any position where a rope passes between rollers.

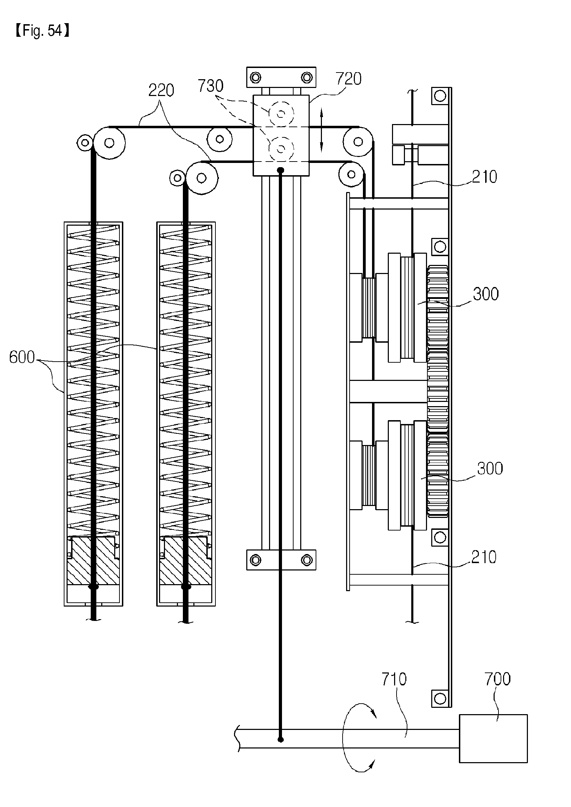

Moreover, in the wave power generating apparatus according to the present disclosure, the float vertical transfer device 700 is provided to adjust the height of the float 100 according to the height of a sea surface varying by tides. The float vertical transfer device 700 may be provided at one side of the return mechanism 600, the return rope 220 may be coupled to be hooked by the roller 730 formed at one side of the moving block 720, and the moving block 720 may be connected to the float vertical transfer device 700 so that the height of the float 100 may be adjusted according to the operation of the float vertical transfer device 700. Therefore, as shown in Fig. 54, the return rope 220 connected between the power transmission unit 300 and the return mechanism 600 is hooked by the roller 730 formed at the moving block 720, the moving block 720 is configured to move along a guide rail, and the moving block 720 is connected to the rope fixing shaft 710 coupled to the float vertical transfer device 700 by a rope or the like to rotate the float vertical transfer device 700 so as to wind or unwind the rope, thereby moving the moving block 720 to pull or unwind the power transmission rope 210. At this time, in the state of Fig. 54, the float 100 is placed at the highest position, and if the moving block 720 moves downwards, since the return mechanism 600 has elasticity, the return rope 220 at the return mechanism 600 is not pulled, but the return rope 220 at the power transmission unit 300 is pulled to move the float 100 connected thereto downwards. Therefore, since the height of the float 100 is adjusted according to a tidal motion, power may be generated regardless of the height of a tide.

In addition, the frame 900 may be coupled to the outer side of the main body 800. At this time, a single frame 900 may be coupled to a single main body 800, and the frames 900 may be connected by a hinge so that a plurality of main bodies is connected long. In addition, the plurality of main bodies 800 may also be coupled to a single frame 900 which is long. At this time, the entire frame 900 may be configured as a single body. However, if the frame 900 is made of hard material, a great moment is generated in view of structural mechanics even though just a small force is applied, which results in a weak structure. In order to solve this problem, if several short frames are prepared and jointly connected, it is possible to prevent a great moment from being generated, and only a failed frame may be selectively repaired.

In addition, even though the frame 900 may be entirely made of a long single frame, several frames may also be provided so that both ends of the frames are connected by hinges, which ensures easy fabrication and allows only a failed frame to be selectively repaired.

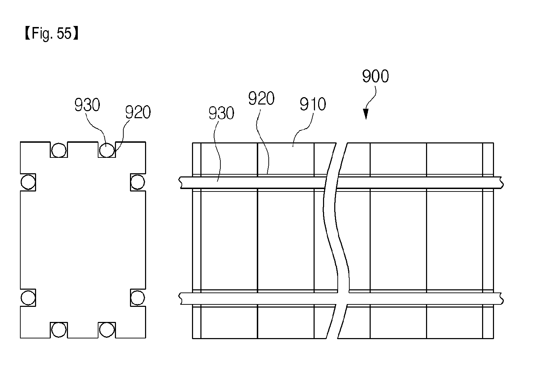

Moreover stainless plates may be placed to both ends of the frame 900, and several frame cells 910 made of elastic material may be closely adhered between them by using several long bolts and nuts. In this case, the frame may have flexible elasticity, and therefore a structural moment generated by a tide is offset in the frame, which enhances the safety of the wave power generation system. In addition, as shown in Fig. 55, the frame 900 may be formed by stacking a plurality of frame cells 910, forming grooves 911 respectively at the outer sides of the frame cells 910 and binding and fixing the frame cells 910 by a coupling unit 912 such as a rope or a wire.

The present disclosure is not limited to the above embodiments, but may be applied in various ways. In addition, the present disclosure may be modified in various ways by those skilled in the art without departing from the scope of the present disclosure defined in the appended claims.

## Claims

1. Awave power generating apparatus, comprising:
a float (100) floating on a sea surface by buoyancy;
a power transmission rope (210) having one end coupled to the float (100);
a power transmission unit (300) spaced apart from a lower side of the float (100) and configured so that the power transmission rope (210) is wound therearound to transmit a rotating force only in one direction;
a power transmission shaft (400) rotating with power transmitted from the power transmission unit (300);
a generator (500) connected to one side of the power transmission shaft (400);
a return rope (220) having one end wound around the power transmission unit (300); and
a return mechanism (600) to which the other end of the return rope (220) is coupled,
wherein the power transmission rope (210), the return rope (220) and the power transmission shaft (400) are coupled by the power transmission unit (300), so that the power transmission shaft (400) rotates only when the power transmission rope (210) is pulled to one side.

2. The wave power generating apparatus according to claim 1,
wherein the float (100) includes one or more floats which are bound to configure a single float (100).

3. The wave power generating apparatus according to claim 2,
wherein the float (100) has a compartment formed therein.

4. The wave power generating apparatus according to claim 1,
wherein the float (100) is formed to have a hollow therein, and a valve is formed at one side of the float (100) to adjust an inflow of air.

5. The wave power generating apparatus according to claim 1,
wherein the power transmission unit (300) is a one-directional latchet clutch (310).

6. The wave power generating apparatus according to claim 5, wherein the one-directional latchet clutch (310) includes:
a disk-type latchet wheel (10) having a hollow formed at one side thereof and several latchets (11) formed at an inner circumference thereof;
a pole fixing plate (20) having a disk shape; and
several poles (30) of which one side is coupled to a predetermined circumference of one surface of the pole fixing plate (20) by means of a hinge (31),
wherein the several poles (30) coupled to one side of the pole fixing plate (20) are coupled to be inserted into the inner side of the latchet wheel (10) where the latchets (11) are formed, and the several poles (30) respectively have a mount groove (32) formed at an inner side of a side contacting the pole fixing plate (20) in a radial direction, so that an elastic unit (40) is inserted into the mount groove (32).

7. The wave power generating apparatus according to claim 6,
wherein the elastic unit (40) is an O-ring.

8. The wave power generating apparatus according to claim 6,
wherein a rotating roller (34) is coupled to an end portion (33) of the pole (30).

9. The wave power generating apparatus according to claim 6,
wherein the one-directional latchet clutch (310) includes two-stage pulleys (311) formed at one side of the latchet wheel (10), the power transmission rope (210) has one end coupled to the float (100) and the other end wound around one pulley of the two-stage pulleys (311), the return rope (220) has one end coupled to the return mechanism (600) and the other end wound around the other pulley of the two-stage pulleys (311), and the power transmission rope (210) and the return rope (220) are wound around the two-stage pulleys (311) in different directions.

10. The wave power generating apparatus according to claim 9, further comprising a contact roller unit (320) provided at one side of the two-stage pulleys (311) to press and closely adhere to the power transmission rope (210) or the return rope (220) wound around the two-stage pulleys (311).

11. The wave power generating apparatus according to claim 1,
wherein the return mechanism (600) includes a pair of asymmetric pendulums (620) respectively coupled to one side of the fixed plate (610) by means of a hinge (611) to serve as a ballast, rollers (621) are coupled to both end portions of the pendulum (620), and the return rope (220) passes through the rollers (621) so that the length of the return rope (220) is adjusted by means of pendulum movement of the asymmetric pendulums (620).

12. The wave power generating apparatus according to claim 11,
wherein a gear (623) is coupled to and engaged with the hinge (611) of the asymmetric pendulums (620).

13. The wave power generating apparatus according to claim 11,
wherein the return mechanism (600) includes a torsion spring (622) having one end fixed to the fixed plate (610) and the other end fixed to the pendulum (620).

14. The wave power generating apparatus according to claim 1,
wherein the return mechanism (600) is a ballast (630) to which the other end of the return rope (220) is coupled.

15. The wave power generating apparatus according to claim 1,
wherein the return mechanism (600) has a hollow (641) formed at the inner side of a roller (640) so that a clockwork spring (650) is inserted therein, the clockwork spring (650) has one end fixed to the roller (640) and the other end fixed to a shaft (642), and the return rope (220) is wound around the roller (640).

16. The wave power generating apparatus according to claim 1, wherein the return mechanism (600) includes:
a pipe (660) having a hollow formed therein;
a coil spring (670) provided in the pipe (660); and
a sliding block (680) provided in the pipe (660) to contact the coil spring (670), the return rope (220) being fixed to the sliding block (680).

17. The wave power generating apparatus according to claim 1, further comprising a reduction pulley (841) provided between the power transmission unit (300) and the return mechanism (600),
wherein the reduction pulley (841) includes a first pulley (841a) and a second pulley (841 b), the second pulley (841 b) has a smaller diameter than the first pulley (841a), both ends of the return rope (220) are wound around the power transmission unit (300) and the first pulley (841a) of the reduction pulley (841), and the second return rope (230) has one end wound around the second pulley (841b) and the other end coupled to the return mechanism (600).

18. The wave power generating apparatus according to claim 1, further comprising a gear reduction mechanism provided between the power transmission unit (300) and the return mechanism (600),
wherein one end of the return rope (220) is wound around a pulley of the gear reduction mechanism, and the other end of the return rope (220) is coupled to the return mechanism (600).

19. The wave power generating apparatus according to claim 1, further comprising a float vertical transfer device (700) provided at one side of the return mechanism (600) so that the return rope (220) is coupled thereto.

20. The wave power generating apparatus according to claim 1, further comprising:
a main body (800) for accommodating the power transmission unit (300), the power transmission shaft (400), the generator (500) and the return mechanism (600) therein; and
a frame (900) coupled to an outer side of the main body (800),
wherein a balance tank (820) is further formed at one side of the frame (900) or the main body (800).

21. The wave power generating apparatus according to claim 20,
wherein a plurality of moving wheels (810) are formed in the main body (800), and the moving wheel (810) has a hollow (811) formed therein.

22. The wave power generating apparatus according to claim 20,
wherein the main body (800) and the frame (900) are afloat from a seabed by a predetermined height, and the main body (800) or the frame (900) is connected to the seabed by a frame support rope (950).

23. The wave power generating apparatus according to claim 20, further comprising a frame vertical adjustment device (960) formed at one side of the main body (800) or the frame (900),
wherein the frame vertical adjustment device (960) is connected to the seabed by a frame support rope (950).

24. The wave power generating apparatus according to claim 20,
wherein the frame (900) is connected to the seabed by a plurality of frame support ropes (950) formed in a horizontal direction.

25. The wave power generating apparatus according to claim 20, wherein the frame (900) includes:
several frame cells (910) stacked side by side;
end plates (920) coupled to both sides of an outer surface of an outermost frame cell (910) of the frame cells (910); and
a fastening unit (930) coupled to the frame cell (910) through the end plate (920).

26. The wave power generating apparatus according to claim 20,
wherein the frame (900) includes a plurality of frame cells (910) and a main body frame cell (915) stacked side by side, and a penetration rope (913) is coupled through the frame cells (910) and the main body frame cell (915), and
wherein the main body frame cell (915) includes a pipe (916) with a hollow therein and a rope fixing unit (910a) is coupled to the main body frame cell (915) by means of a fixture (914) so that the penetration rope (913) is fixed.

27. The wave power generating apparatus according to claim 20,
wherein the frame (900) is formed as a rectangular pipe or a hollow pipe and includes a balance tank (820) therein.

28. The wave power generating apparatus according to claim 20,
wherein the frame (900) includes a plurality of frames arranged in parallel at regular intervals, and the float (100) is connected to each wave power generating apparatus (1000) by means of a power transmission rope (210).

29. The wave power generating apparatus according to claim 27,
wherein the frame (900) includes several frames arranged in the length direction thereof, and both ends of each frame (900) are coupled by a hinge (940).

30. The wave power generating apparatus according to claim 25,
wherein the frame cell (910) is an elastic body.

31. The wave power generating apparatus according to claim 1,
wherein a plurality of wave power generating apparatuses (1000) are connected in parallel,
wherein the power transmission unit (300), the power transmission shaft (400), the generator (500) and the return mechanism (600) are accommodated in a main body (800) of each wave power generating apparatus (1000) so that the plurality of main bodies (800) are connected to each other,
wherein the floats (100) are connected to each other by a float support rope (110), and
wherein a plurality of inclined power transmission ropes (210a) are coupled with a slope so that one end thereof is wound around the power transmission unit (300) of the main body (800) and the other end thereof is coupled to an adjacent float (100).

32. The wave power generating apparatus according to claim 31,
wherein a main support rope (120) is horizontally disposed to be spaced apart from a lower side of the float (100) by a predetermined distance so that one end or both ends thereof are fixed to the seabed, and
wherein a branched support rope (130) of which both ends are coupled to the float (100) and the main support rope (120) is connected with a slope.

33. The wave power generating apparatus according to claim 31,
wherein a collision plate (140) extending perpendicularly is formed at a lower surface of the float (100).

34. The wave power generating apparatus according to claim 33,
wherein one side of the collision plate (140) is coupled to the float (100) by a hinge (150), and both ends of an elastic unit (160) are coupled to one side of the float (100) and the other side of the collision plate (140).

35. The wave power generating apparatus according to claim 31,
wherein the float (100) has an inclined side or a round side.

36. The wave power generating apparatus according to claim 31,
wherein an inlet hole (101) is formed at one side of the float (100) and an outlet hole (102) is formed at an upper surface thereof, so that the inlet hole (101) and the outlet hole (102) communicate with each other.

37. The wave power generating apparatus according to claim 31,
wherein an inlet hole (101) is formed at one side of the float (100) and an outlet hole (102) is formed at a lower surface thereof, so that the inlet hole (101) and the outlet hole (102) communicate with each other.

38. The wave power generating apparatus according to claim 31,
wherein an inlet hole (101) is formed at one side of the float (100) and outlet holes (102) are respectively formed at an upper surface and a lower surface thereof, so that the inlet hole (101) and the outlet holes (102) communicate with each other.

39. The wave power generating apparatus according to claim 31,
wherein horn-type guides (850) are formed at both sides of a roller (831) which the power transmission rope (210) or the inclined power transmission rope (210a) passes, to be spaced apart from each other by a predetermined distance.

40. The wave power generating apparatus according to claim 31,
wherein the return rope (220) is provided at one side of the return mechanism (600) and coupled to be hooked by a roller (730) formed at one side of a moving block (720), and the moving block (720) is connected to the float vertical transfer device (700) so that the height of the float (100) is adjusted by operation of the float vertical transfer device (700).
